# EUROPÄISCHE PATENTSCHRIFT

(11) **EP 0 974 622 B1**
(45) Veröffentlichungstag und Bekanntmachung des Hinweises auf die Patenterteilung: **20.11.2002**
(21) Anmeldenummer: 99113892.6
(22) Anmeldetag: 16.07.1999
(51) Int. Cl.: C09B 67/22, C09B 62/006, D06P 1/38

(54) **Farbstoffmischung von wasserlöslichen faserreaktiven Azofarbstoffen, Verfahren zu ihrer Herstellung und ihre Verwendung**
Mixture of water soluble reactive azo dyes, process to manufacture it and its use
Mélange de colorants azoiques réactifs aquasolubles, son procédé de fabrication et son utilisation

(30) Priorität: 21.07.1998 DE 19832604; 17.09.1998 DE 19842580
(43) Veröffentlichungstag der Anmeldung: 26.01.2000
(73) Patentinhaber: DyStar Textilfarben GmbH & Co. Deutschland KG, 65926 Frankfurt am Main (DE)
(72) Erfinder: Russ, Werner, Dr., 65439 Flörsheim-Wicker (DE); Gröbel, Bengt-Thomas, Dr., 65529 Niederems (DE); Schumacher, Christian, Dr., 65779 Kelkheim (DE)

(56) Entgegenhaltungen:
- EP-A- 0 299 315
- EP-A- 0 308 787
- EP-A- 0 525 572
- EP-A- 0 546 372
- EP-A- 0 627 471
- EP-A- 0 719 841
- DE-A- 19 519 620

## Beschreibung

Die Erfindung liegt auf dem technischen Gebiet der faserreaktiven Azofarbstoffe.

Aus den U.S. Patentschriften Nrs. 4 988 803, 5 097 021, 5 342 927, 5 541 300 und 5 548 072 sind Monoazofarbstoffe bekannt, die einen faserreaktiven Rest aus der aminosubstituierten Halogentriazinylamino-Reihe und gegebenenfalls als einen weiteren faserreaktiven Rest einen Rest der Vinylsulfon-Reihe bzw. der Fluorpyrimidinyl-Reihe enthalten. Die darin beschriebenen Farbstoffe besitzen jedoch gewisse anwendungstechnische Mängel, wie beispielsweise eine zu große Abhängigkeit der Farbausbeute von wechselnden Färbeparametern im Färbeprozeß, eine unzureichende Löslichkeit im wäßrigen Färbebad in höheren Farbstoffkonzentrationen in Gegenwart von Elektrolytsalzen oder einen ungenügenden Farbaufbau auf Baumwolle und insbesondere Viskose (ein guter Farbaufbau ergibt sich aus der Fähigkeit des Farbstoffes, bei Anwendung erhöhter Farbstoffkonzentrationen im Färbebad die entsprechend farbstärkere Färbung zu liefern). Folge dieser Mängel können schlechte Reproduzierbarkeiten der erhältlichen Färbungen sein.

Es ist jedoch insbesondere wichtig, Färbungen mit guter Farbausbeute zu erhalten, d. h. Färbungen, deren Farbtiefe im Verhältnis zu eingesetzter Farbstoffmenge, beispielsweise im Vergleich zu anderen Farbstoffen, aufgrund der Farbeigenschaft des Farbstoffes selbst (hoher Extinktionswert) und aufgrund des färberischen Verhaltens dieses Farbstoffes, wie gutes Ausziehvermögen und hoher Fixierwert, möglichst hoch ist. Setzt man Mischungen von Farbstoffen bestimmter Farbausbeute ein, so ist es die Regel, daß sich die Farbausbeute dieser Mischung aus dem Mittel der Summe der Farbausbeuten der Einzelfarbstoffe ergibt. Die Farbausbeute einer Mischung von beispielsweise zwei Farbstoffen wird deshalb geringer sein als die Farbausbeute desjenigen mit der größeren Farbausbeuteeigenschaft.

Mit der vorliegenden Erfindung wurden nunmehr Farbstoffmischungen gefunden, die Färbungen mit einer Farbausbeute liefern, die überraschenderweise deutlich höher liegt als das Mittel der Summe der Farbausbeuten der Färbungen der Einzelfarbstoffe der Farbstoffmischung. Dieser synergistische Effekt zeigt sich zudem in einem verbesserten Aufbauverhalten der erfindungsgemäßen Mischung gegenüber den einzelnen Farbstoffen der Mischung.

Die Erfindung betrifft somit Farbstoffmischungen, gekennzeichnet durch den Gehalt von einem oder mehreren, wie zwei oder drei, Farbstoffen der allgemeinen Formel (1) und einem oder mehreren, wie zwei, drei oder vier, Farbstoffen, die aus der Gruppe der Farbstoffe der allgemeinen Formeln (2) oder (3) oder (2) und (3) ausgewählt sind: 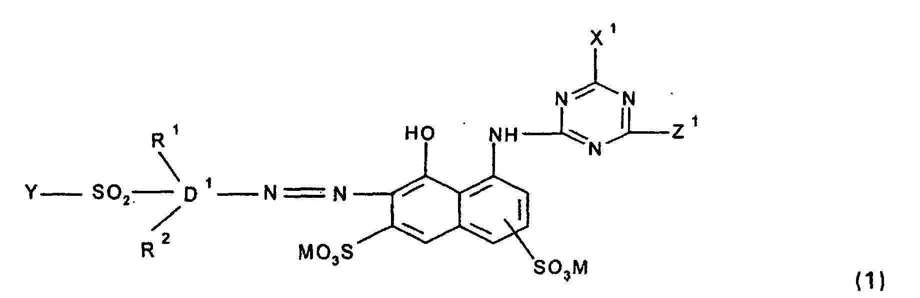 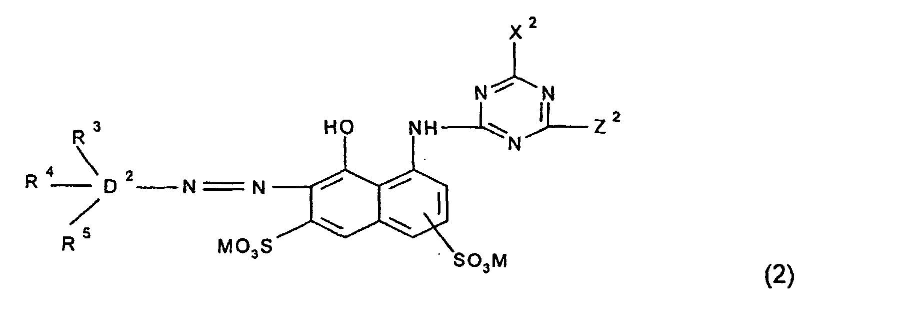 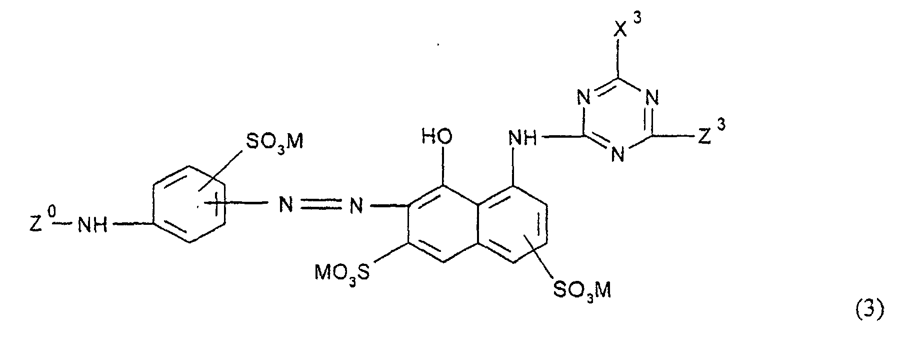 in welchen bedeuten:
- M: ist Wasserstoff oder ein Alkalimetall, wie Natrium, Kalium oder Lithium;
- D¹: ist ein Benzol- oder Naphthalinrest;
- D²: ist ein Benzol- oder Naphthalinrest;
- Y: ist Vinyl oder ist Ethyl, das in β-Stellung durch einen alkalisch eliminierbaren Substituenten substituiert ist, wie beispielsweise durch Chlor, Sulfato, Thiosulfato, Phosphato, Alkanoyloxy von 2 bis 5 C-Atomen, wie Acetyloxy, und Sulfobenzoyloxy, und ist bevorzugt Vinyl oder β-Sulfatoethyl;
- R¹: ist Wasserstoff, Alkyl von 1 bis 4 C-Atomen, wie Ethyl und insbesondere Methyl, oder Alkoxy von 1 bis 4 C-Atomen, wie Ethoxy und insbesondere Methoxy, falls D¹ für einen Benzolrest steht, hiervon bevorzugt Wasserstoff, Methyl und Methoxy, insbesondere Wasserstoff, oder ist Wasserstoff oder Sulfo, bevorzugt Wasserstoff, falls D¹ einen Naphthalinrest bedeutet;
- R²: ist Wasserstoff, Alkyl von 1 bis 4 C-Atomen, wie Ethyl und insbesondere Methyl, oder Alkoxy von 1 bis 4 C-Atomen, wie Ethoxy und insbesondere Methoxy, falls D¹ für einen Benzolrest steht, hiervon bevorzugt Wasserstoff, Methyl und Methoxy, insbesondere Wasserstoff, oder ist Wasserstoff oder Sulfo, bevorzugt Sulfo, falls D¹ einen Naphthalinrest bedeutet;
- R³: ist Wasserstoff, Alkyl von 1 bis 4 C-Atomen, wie Ethyl und insbesondere Methyl, Alkoxy von 1 bis 4 C-Atomen, wie Ethoxy und insbesondere Methoxy, Carboxy oder Sulfo, falls D² einen Benzolrest bedeutet, hiervon bevorzugt Wasserstoff, Methyl und Methoxy, oder ist Wasserstoff oder Sulfo, bevorzugt Wasserstoff, falls D² einen Naphthalinrest bedeutet;
- R⁴: ist Wasserstoff, Alkyl von 1 bis 4 C-Atomen, wie Ethyl und insbesondere Methyl, Alkoxy von 1 bis 4 C-Atomen, wie Ethoxy und insbesondere Methoxy, oder Sulfo, falls D² für einen Benzolrest steht, hiervon bevorzugt Wasserstoff, Methyl, Methoxy oder Sulfo, insbesondere Wasserstoff oder Sulfo, oder ist Wasserstoff oder Sulfo, bevorzugt Sulfo, falls D² einen Naphthalinrest bedeutet;
- R⁵: ist Wasserstoff, Chlor, Brom oder Sulfo, falls D² für einen Benzolrest steht, bevorzugt hiervon Wasserstoff, oder ist Wasserstoff oder Sulfo, falls D² einen Naphthalinrest bedeutet;
- X¹: ist Fluor,
- X²: ist Fluor, Brom oder Chlor, bevorzugt Chlor und insbesondere Fluor;
- Z¹: ist eine Gruppe der allgemeinen Formel (4a) oder (4b) und bevorzugt eine Gruppe der allgemeinen Formel (4a) 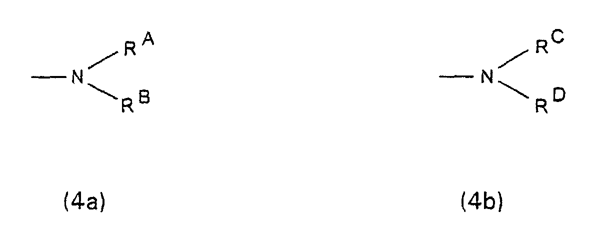 in welchen
R^{A} Wasserstoff oder Alkyl von 1 bis 4 C-Atomen, wie Methyl und insbesondere Ethyl, ist, das substituiert sein kann, beispielsweise durch Sulfo, Carboxy, Methoxy, Ethoxy, Sulfato, Phosphato, Acetoxy oder Propionyloxy, bevorzugt durch Hydroxy, und bevorzugt Wasserstoff oder β-Hydroxyethyl ist,
R^{B} Wasserstoff oder Alkyl von 1 bis 4 C-Atomen, wie Methyl und insbesondere Ethyl, ist, das substituiert sein kann, beispielsweise durch Sulfo, Carboxy, Methoxy, Ethoxy, Sulfato, Phosphato, Acetoxy oder Propionyloxy, bevorzugt durch Hydroxy, und bevorzugt Wasserstoff oder β-Hydroxyethyl ist, oder die Gruppe -NR^{A}R^{B} bildet den Rest eines 5- bis 7-gliedrigen gesättigten Heterocyclus, wobei der Alkylenrest dieses Heterocyclus noch durch 1 oder 2, bevorzugt 1, Heterogruppen, wie -0- und -NH- , unterbrochen sein kann, und ist bevorzugt Piperidino, Piperazino und insbesondere Morpholino,
R^{C} Wasserstoff oder Alkyl von 1 bis 4 C-Atomen, wie Methyl oder Ethyl, ist oder Alkyl von 1 bis 4 C-Atomen, wie Methyl und insbesondere Ethyl, ist, das substituiert sein kann, wie beispielsweise durch Sulfo, Carboxy, Sulfato oder insbesondere Hydroxy, und bevorzugt Wasserstoff oder β-Hydroxyethyl ist, und
R^{D} Wasserstoff oder Phenyl ist, das durch 1 oder 2 Substituenten aus der Gruppe Alkyl von 1 bis 4 C-Atomen, wie Ethyl und insbesondere Methyl, Alkoxy von 1 bis 4 C-Atomen, wie Ethoxy und insbesondere Methoxy, Carboxy, Sulfo und Chlor substituiert sein kann, und bevorzugt Phenyl ist, das durch einen Substituenten aus der Gruppe Sulfo oder Chlor substituiert ist;
- Z²: hat eine der für Z¹ genannten Bedeutungen und ist bevorzugt eine Gruppe der allgemeinen Formel (4b);
- X³: ist Fluor, Brom oder Chlor, bevorzugt Chlor oder insbesondere Fluor;
- Z³: hat eine der für Z¹ genannten Bedeutungen und ist bevorzugt eine Gruppe der allgemeinen Formel (4a);
- Z⁰: ist eine Gruppe der allgemeinen Formel (5a), (5b), (5c) oder (5d) 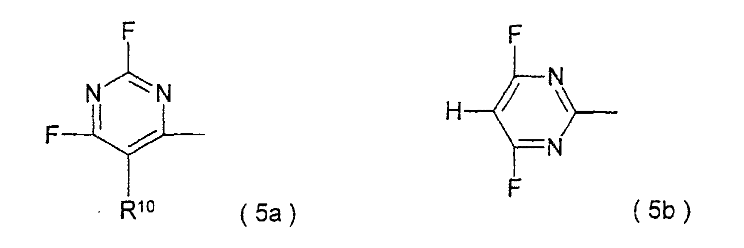 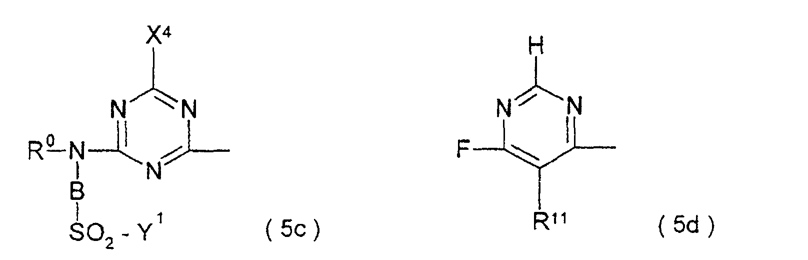
in welchen bedeuten:
- R¹⁰: ist Wasserstoff oder Chlor;
- R¹¹: ist Wasserstoff, Chlor oder Fluor;
- R⁰: ist Wasserstoff, Alkyl von 1 bis 4 C-Atomen, wie Ethyl und insbesondere Methyl, Phenyl oder durch Chlor, Sulfo, Methyl, Ethyl, Methoxy, Ethoxy oder Carboxy substituiertes Phenyl;
- X⁴: hat eine der Bedeutungen von X¹;
- Y¹: hat eine der Bedeutungen von Y;
- B: ist Alkylen von 2 bis 6 C-Atomen, wie n-Ethylen und n-Propylen, oder ist Alkylen-phenylen oder Phenylen-alkylen mit jeweils einem Alkylen von 2 bis 4 C-Atomen, wie n-Ethylen oder n-Propylen, wobei die Phenylreste noch durch 1 oder 2 Substituenten aus der Gruppe Methyl, Methoxy, Ethyl und Ethoxy substituiert sein können, oder ist Alkylen von 3 bis 8 C-Atomen, das durch 1 oder 2 Heterogruppen, wie -O- und -NH- , unterbrochen ist, wie beispielsweise eine Gruppe -(CH₂)₂-O-(CH₂)- ;
die eine Gruppe -SO₃M in den Sulfo-aminonaphthol-Resten der Formeln (1), (2), (3) steht in meta- oder para-Stellung, bevorzugt in meta-Stellung, zur Gruppe NH an den Naphthalinrest gebunden; die Azogruppe in Formel (3) steht in meta- oder para-Stellung, bevorzugt in meta-Stellung, zur Gruppe Z⁰-NH- an den Benzolkern gebunden, wobei die dortige Gruppe -SO₃M bevorzugt in ortho-Stellung zur Azogruppe an den Benzolkern gebunden ist.

In den obigen allgemeinen Formeln sowie in den nachfolgenden allgemeinen Formeln können die einzelnen Formelglieder, sowohl verschiedener als auch gleicher Bezeichnung, im Rahmen ihrer Bedeutung zueinander gleiche oder voneinander verschiedene Bedeutungen haben.

Die Gruppen "Sulfo", "Thiosulfato", "Carboxy", "Phosphato" und "Sulfato" schließen sowohl deren Säureform als auch deren Salzform ein. Demgemäß bedeuten Sulfogruppen Gruppen entsprechend der allgemeinen Formel -SO₃M, Thiosulfatogruppen Gruppen entsprechend der allgemeinen Formel -S-SO₃M, Carboxygruppen Gruppen entsprechend der allgemeinen Formel -COOM, Phosphatogruppen Gruppen entsprechend der allgemeinen Formel -OPO₃M₂ und Sulfatogruppen Gruppen entsprechend der allgemeinen Formel -OSO₃M, in welchen M die obengenannte Bedeutung besitzt.

Bevorzugt sind Farbstoffmischungen, die einen oder mehrere, wie zwei oder drei, bevorzugt einen, Farbstoffe der allgemeinen Formel (1) und einen oder mehrere, wie zwei oder drei oder vier, bevorzugt einen oder zwei, Farbstoffe der allgemeinen Formel (2) oder (3) oder (2) und (3) enthalten, wobei die Reste X¹, X² und X³ die gleiche Bedeutung besitzen und die Reste Z¹ und Z² bevorzugt die gleiche Bedeutung besitzen.

Im allgemeinen sind der oder die Farbstoffe der allgemeinen Formel (1) und der oder die Farbstoffe der allgemeinen Formel (2) oder (3) oder (2) und (3) in der Mischung in einem Mischungsverhältnis von 90:10 Gew.-% bis 10:90 Gew.-%, bevorzugt im Verhältnis von 70:30 Gew.-% bis 30:70 Gew.-%, und insbesondere bevorzugt in einem Verhältnis von 60:40 bis 40:60 Gew.-% enthalten. Sind in der Mischung Farbstoffe der allgemeinen Formeln (2) und (3) enthalten, so liegen diese wiederum in der Regel in einem Mischungsverhältnis von 90 : 10 Gew.-% bis 10 : 90 Gew.-% vor.

Gruppen entsprechend der allgemeinen Formel Y-SO₂-D¹(R¹,R²)- sind beispielsweise 3-(β-Sulfatoethylsulfonyl)-phenyl, 4-(β-Sulfatoethylsulfonyl)-phenyl, 2-Methyl-5-(β-sulfatoethylsulfonyl)-phenyl, 2-Methoxy-5-(β-sulfatoethylsulfonyl)-phenyl, 4-Methyl-3-(β-sulfatoethylsulfonyl)-phenyl, 2,5-Dimethyl-4-(β-sulfatoethylsulfonyl)-phenyl, 2,6-Dimethyl-4-(β-sulfatoethylsulfonyl)-phenyl, 2-Methoxy-4-(β-sulfatoethylsulfonyl)-phenyl, 4-Methoxy-5-(β-sulfatoethylsulfonyl)-phenyl, 2-Methoxy-5-methyl-4-(β-sulfatoethylsulfonyl)-phenyl, 2,4-Dimethoxy-5-(β-sulfatoethylsulfonyl)-phenyl, 2,5-Dimethoxy-4-(β-sulfatoethylsulfonyl)-phenyl, 6-(β-Sulfatoethylsulfonyl)-1-sulfo-naphth-2-yl und β-(β-Sulfatoethylsulfonyl)-6-sulfo-naphth-2-yl, hiervon insbesondere 4-(β-Sulfatoethylsulfonyl)-phenyl, sowie deren Derivate, in welchen die β-Sulfatoethylsulfonyl-Gruppe durch die Vinylsulfonyl- oder β-Thiosulfatoethylsulfonyl- oder β-Chlorethylsulfonyl-Gruppe ausgetauscht ist.

Gruppen der allgemeinen Formel D²(R³,R⁴,R⁵)- sind beispielsweise 2-Sulfo-phenyl, 4-Sulfo-phenyl, 3-Sulfo-phenyl, 2,5-Disulfo-phenyl, 4-Methyl-2-sulfophenyl, 1-Sulfo-naphth-2-yl, 6-Sulfo-naphth-2-yl, 8-Sulfo-naphth-2-yl, 1,5-Disulfo-naphth-2-yl, 1,6-Disulfo-naphth-2-yl und 6,8-Disulfo-naphth-2-yl. Gruppen der Formel (4b) sind beispielsweise 2-Methyl-phenylamino, 2-Chloro-phenylamino, 2-Sulfo-phenylamino, 4-Sulfo-phenylamino und insbesondere Phenylamino, 4-Chloro-phenylamino und 3-Sulfo-phenylamino.

Die erfindungsgemäßen Farbstoffmischungen lassen sich in an und für sich üblicher Verfahrensweise herstellen, so beispielsweise durch mechanisches Vermischen der Einzelfarbstoffe, sei es in Form von deren Farbstoffpulvern oder -granulaten oder deren Syntheselösungen oder von wäßrigen Lösungen der Einzelfarbstoffe generell, welche noch übliche Hilfsmittel enthalten können, oder durch chemische Synthese in einer Eintopf-Reaktion, so beispielsweise durch Einsatz der Diazokomponenten und Kupplungskomponenten der Einzelfarbstoffe im selben Reaktionsansatz und der Halogentriazin- oder Halogenpyrimidin-Verbindungen bei der Umsetzung mit den aminogruppenhaltigen Kupplungskomponenten bzw. Aminoazo-Ausgangsverbindungen, jeweils unter Verwendung der erforderlichen Einzelfarbstoff- oder Reaktionskomponenten-Anteile. Solche Syntheseweisen sind dem Fachmann geläufig. Beispielsweise kann man in der Weise vorgehen, daß man eine oder mehrere, wie zwei oder drei, Azoverbindungen der allgemeinen Formel (6A) und eine oder mehrere, wie zwei, drei oder vier, Azoverbindungen der allgemeinen Formeln (6B) oder (6C) oder (6B) und (6C) 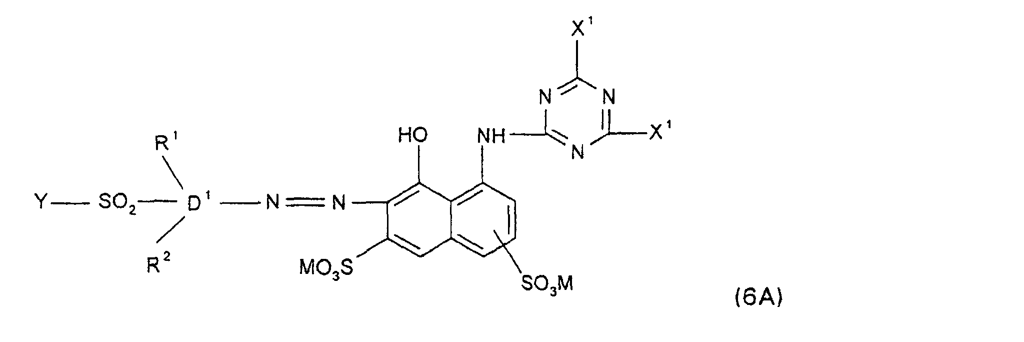 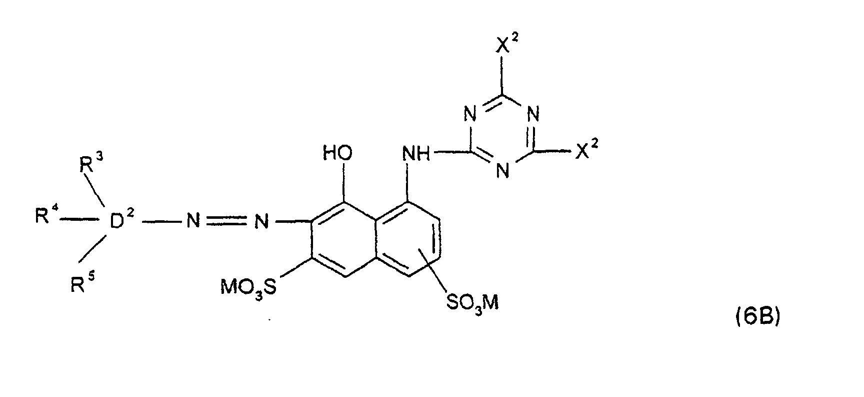 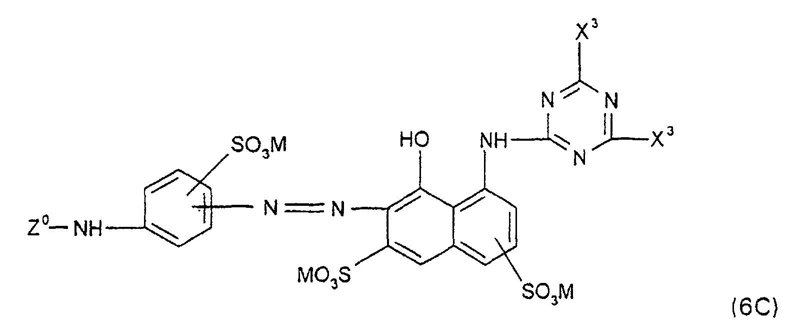 in welchen die einzelnen Formelglieder die anfangs genannten Bedeutungen haben, zusammen im selben Reaktionsansatz mit einer oder mehreren, wie zwei oder drei, Aminoverbindungen entsprechend den allgemeinen Formeln H-Z¹, H-Z² und/oder H-Z³ in an und für sich bekannter Verfahrensweise umsetzt, wie beispielsweise bei einer Temperatur zwischen 10 und 60°C, bevorzugt zwischen 20 und 40°C, und einem pH-Wert zwischen 2 und 8, bevorzugt zwischen 4 und 5. Man kann jedoch auch in der Weise auf synthetischem Wege eine erfindungsgemäße Farbstoffmischung herstellen, indem man von den an und für sich bekannten Ausgangsverbindungen der allgemeinen Formeln (7A) und (7B) oder (7C) oder (7B) und (7C) 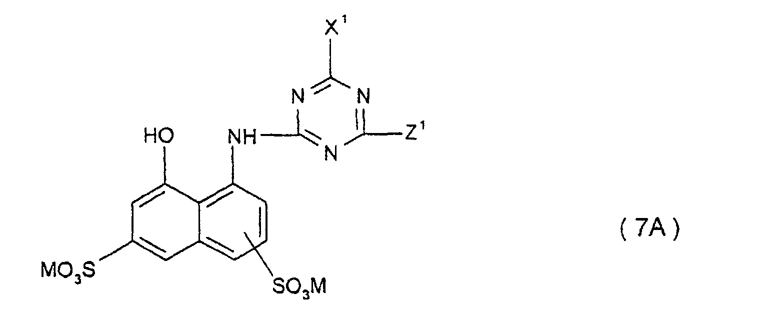 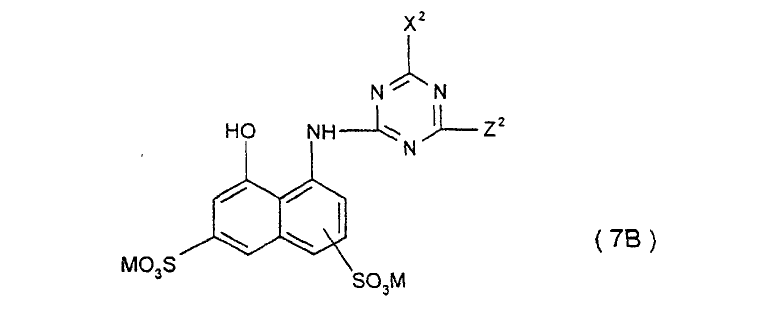 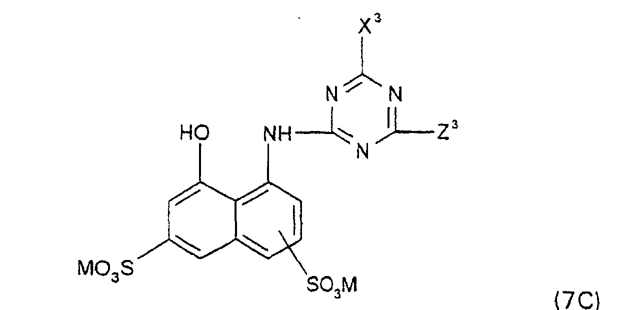 mit M, X¹, X², X³, Z¹, Z² und Z³ der obengenannten Bedeutung ausgeht und diese in den entsprechenden Anteilen gemeinsam mit den jeweiligen Aminoverbindungen entsprechend den allgemeinen Formeln Y-SO₂-D¹(R¹R²)-NH₂, D²(R³,R⁴,R⁵)-NH₂ und gegebenenfalls der allgemeinen Formel (8) 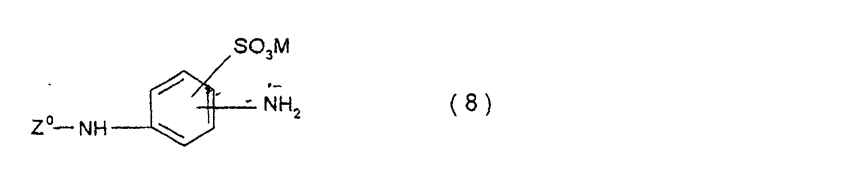 mit Z⁰ und M der obengenannten Bedeutung nach deren Diazotierung kuppelt, wie beispielsweise bei einer Temperatur zwischen 0 und 30°C, bevorzugt zwischen 10 und 20°C, und bei einem pH-Wert zwischen 3 und 7,5, bevorzugt zwischen 4,5 und 6,5.

Die erfindungsgemäßen Farbstoffmischungen können als Präparation in fester oder in flüssiger (gelöster) Form vorliegen. In fester Form enthalten sie im allgemeinen die bei wasserlöslichen und insbesondere faserreaktiven Farbstoffen üblichen Elektrolytsalze, wie Natriumchlorid, Kaliumchlorid und Natriumsulfat, und können desweiteren die in Handelsfarbstoffen üblichen Hilfsmittel enthalten, wie Puffersubstanzen, die einen pH-Wert in wäßriger Lösung zwischen 3 und 7 einzustellen vermögen, wie Natriumacetat, Natriumcitrat, Natriumborat, Natriumhydrogencarbonat, Natriumdihydrogenphosphat und Dinatriumhydrogenphosphat, Färbehilfsmittel, Entstaubungsmittel und geringe Mengen an Sikkativen; falls sie in flüssiger, wäßriger Lösung (einschließlich des Gehaltes von Verdickungsmitteln, wie sie bei Druckpasten üblich sind) vorliegen, können sie auch Substanzen enthalten, die die Haltbarkeit dieser Präparationen gewährleisten, wie beispielsweise schimmelverhütende Mittel.

In fester Form liegen die erfindungsgemäßen Farbstoffmischungen im allgemeinen als elektrolytsalzhaltige Pulver oder Granulate (im nachfolgenden allgemein als Präparation bezeichnet) mit gegebenenfalls einem oder mehreren der obengenannten Hilfsmittel vor. In den Präparationen ist die Farbstoffmischung zu 10 bis 80 Gew.-%, bezogen auf die enthaltene Präparation, enthalten. Die Puffersubstanzen liegen in der Regel in einer Gesamtmenge von bis zu 5 Gew.-%, bezogen auf die Präparation, vor. Sofern die erfindungsgemäßen Farbstoffmischungen in wäßriger Lösung vorliegen, so beträgt der Gesamtfarbstoffgehalt in diesen wäßrigen Lösungen bis zu etwa 50 Gew.-%, wie beispielsweise zwischen 5 und 50 Gew.-%., wobei der Elektrolytsalzgehalt in diesen wäßrigen Lösungen bevorzugt unterhalb 10 Gew.-%, bezogen auf die wäßrige Lösung, beträgt; die wäßrigen Lösungen (Flüssigpräparationen) können die erwähnten Puffersubstanzen in der Regel in einer Menge von bis zu 5 Gew.-%, bevorzugt bis zu 2 Gew.-%, enthalten.

Die Abscheidung der auf chemischem Wege hergestellten erfindungsgemäßen Farbstoffmischungen aus deren Syntheselösung kann nach allgemein bekannten Methoden erfolgen, so beispielsweise entweder durch Ausfällen aus dem Reaktionsmedium mittels Elektrolyten, wie beispielsweise Natriumchlorid oder Kaliumchlorid, oder durch Eindampfen oder Sprühtrocknung der Reaktionslösung, wobei dieser Reaktionslösung eine Puffersubstanz zugefügt werden kann.

Die erfindungsgemäßen Farbstoffmischungen können weitere faserreaktive Farbstoffe, die zum Nuancieren der Farbstoffmischung dienen, in einer Menge von bis zu 5 Gew.-% enthalten. Diese "Nuancierfarbstoffe" können durch übliches Vermischen hinzugefügt oder aber auch auf chemischem Wege im selben Reaktionsansatz zusammen mit der oben beschriebenen Synthese einer erfindungsgemäßen Farbstoffmischung hergestellt und in die Farbstoffmischung eingebracht werden, wenn eine oder mehrere der Komponenten des Nuancierfarbstoffes mit den Komponenten der Farbstoffe der Formeln (1), (2) und/oder (3) identisch sind. So kann man zur Herstellung einer erfindungsgemäßen Farbstoffmischung mit dem Gehalt eines Nuancierfarbstoffes mit bestimmtem Chromophor beispielsweise solche zusätzlichen Ausgangsverbindungen in den Reaktionsansatz einsetzen, die anstelle der 3,6-Disulfo-1-amino-8-naphthol-Komponente der Farbstoffe (1), (2) und/oder (3) als Komponente das 4,6-Disulfo-1-amino-8-naphthol oder 2- oder 3-Amino-6-sulfo-8-naphthol oder eine 1-(Aminophenyl)-3-carboxy- oder -3-methyl-5-pyrazoion enthalten.

Die erfindungsgemäßen Farbstoffmischungen besitzen wertvolle anwendungstechnische Eigenschaften. Sie werden zum Färben oder Bedrucken von hydroxy- und/oder carbonamidgruppenhaltigen Materialien, beispielsweise in Form von Flächengebilden, wie Papier und Leder oder von Folien, wie beispielsweise aus Polyamid, oder in der Masse, wie beispielsweise von Polyamid und Polyurethan, insbesondere aber von diesen Materialien in Faserform verwendet. Auch können die bei der Synthese anfallenden Lösungen der erfindungsgemäßen Farbstoffmischungen, gegebenenfalls nach Zusatz einer Puffersubstanz, gegebenenfalls auch nach Aufkonzentrieren oder Verdünnen, direkt als Flüssigpräparation der färberischen Verwendung zugeführt werden.

Die vorliegende Erfindung betrifft somit auch die Verwendung der erfindungsgemäßen Farbstoffmischungen zum Färben oder Bedrucken dieser Materialien bzw. Verfahren zum Färben oder Bedrucken solcher Materialien in an und für sich üblichen Verfahrensweisen, bei welchen man eine erfindungsgemäße Farbstoffmischung oder deren Einzelkomponenten (Farbstoffe) einzeln zusammen als Farbmittel einsetzt. Bevorzugt kommen die Materialien in Form von Fasermaterialien zur Anwendung, insbesondere in Form von Textilfasern, wie Geweben oder Garnen, wie in Form von Strängen oder Wickelkörpern.

Hydroxygruppenhaltige Materialien sind solche natürlichen oder synthetischen Ursprungs, wie beispielsweise Cellulosefasermaterialien oder deren Regeneratprodukte und Polyvinylalkohole. Cellulosefasermaterialien sind vorzugsweise Baumwolle, aber auch andere Pflanzenfasern, wie Leinen, Hanf, Jute und Ramiefasern; regenerierte Cellulosefasern sind beispielsweise Zellwolle und Viskosekunstseide.

Carbonamidgruppenhaltige Materialien sind beispielsweise synthetische und natürliche Polyamide und Polyurethane, insbesondere in Form von Fasern, beispielsweise Wolle und andere Tierhaare, Seide, Leder, Polyamid-6,6, Polyamid-6, Polyamid-11 und Polyamid-4.

Die erfindungsgemäßen Farbstoffmischungen lassen sich auf den genannten Substraten, insbesondere auf den genannten Fasermaterialien, nach den für wasserlösliche, insbesondere nach den für faserreaktive Farbstoffe bekannten Anwendungstechniken applizieren und fixieren. So erhält man mit ihnen auf Cellulosefasern nach den Ausziehverfahren aus langer Flotte unter Verwendung von verschiedensten säurebindenden Mitteln und gegebenenfalls neutralen Salzen, wie Natriumchlorid oder Natriumsulfat, Färbungen mit sehr guten, gegenüber den Einzelfarbstoffen verbesserten Farbausbeuten. Man färbt bevorzugt in wäßrigem Bad bei Temperaturen zwischen 40 und 105°C, gegebenenfalls bei einer Temperatur bis zu 130°C unter Druck, und gegebenenfalls in Gegenwart von üblichen Färbereihilfsmitteln. Man kann dabei so vorgehen, daß man das Material in das warme Bad einbringt und dieses allmählich auf die gewünschte Färbetemperatur erwärmt und den Färbeprozeß bei dieser Temperatur zu Ende führt. Die das Ausziehen der Farbstoffe beschleunigenden Neutralsalze können dem Bade gewünschtenfalls auch erst nach Erreichen der eigentlichen Färbetemperatur zugesetzt werden.

Nach den Klotzverfahren werden auf Cellulosefasern ebenfalls ausgezeichnete Farbausbeuten und ein sehr guter Farbaufbau erhalten, wobei durch Verweilen bei Raumtemperatur oder erhöhter Temperatur, beispielsweise bis zu etwa 60°C, durch Dämpfen oder mit Trockenhitze in üblicher Weise fixiert werden kann.

Ebenfalls nach den üblichen Druckverfahren für Cellulosefasern, die einphasig - beispielsweise durch Bedrucken mit einer Natriumbicarbonat oder ein anderes säurebindendes Mittel enthaltenden Druckpaste und anschließendes Dämpfen bei 100 bis 103°C - oder zweiphasig - beispielsweise durch Bedrucken mit neutraler oder schwach saurer Druckfarbe und anschließendem Fixieren entweder durch Hindurchführen durch ein heißes elektrolythaltiges alkalisches Bad oder durch Überklotzen mit einer alkalischen elektrolythaltigen Klotzflotte und anschließendern Verweilen oder Dämpfen oder Behandlung mit Trockenhitze des alkalisch überklotzten Materials - durchgeführt werden können, erhält man farbstarke Drucke mit gutem Stand der Konturen und einem klaren Weißfond. Der Ausfall der Drucke ist von wechselnden Fixierbedingungen nur wenig abhängig.

Bei der Fixierung mittels Trockenhitze nach den üblichen Thermofixierverfahren verwendet man Heißluft von 120 bis 200°C. Neben dem üblichen Wasserdampf von 101 bis 103°C kann auch überhitzter Dampf und Druckdampf von Temperaturen bis zu 160°C eingesetzt werden.

Die säurebindenden und die Fixierung der Farbstoffe der erfindungsgemäßen Farbstoffmischungen auf den Cellulosefasern bewirkenden Mittel sind beispielsweise wasserlösliche basische Salze der Alkalimetalle und ebenfalls Erdalkalimetalle von anorganischen oder organischen Säuren oder Verbindungen, die in der Hitze Alkali freisetzen. Insbesondere sind die Alkalimetallhydroxide und Alkalimetallsalze von schwachen bis mittelstarken anorganischen oder organischen Säuren zu nennen, wobei von den Alkaliverbindungen vorzugsweise die Natrium- und Kaliumverbindungen gemeint sind. Solche säurebindenden Mittels sind beispielsweise Natriumhydroxid, Kaliumhydroxid, Natriumcarbonat, Natriumbicarbonat, Kaliumcarbonat, Natriumformiat, Natriumdihydrogenphosphat, Dinatriumhydrogenphosphat, Natriumtrichloracetat, Wasserglas oder Trinatriumphosphat.
Die erfindungsgemäßen Farbstoffmischungen zeichnen sich auf den Cellulosefasermaterialien bei Anwendung in den Färbe- und Druckverfahren durch eine höhe Fixierausbeute aus. Die Cellulosefärbungen zeigen nach der üblichen Nachbehandlung durch Spülen zur Entfernung von nicht fixierten Farbstoffanteilen ausgezeichnete Naßechtheiten, zumal sich nicht fixierte Farbstoffanteile leicht wegen ihrer guten Kaltwasserlöslichkeit auswaschen lassen.

Die mit den erfindungsgemäßen Farbstoffmischungen erhältlichen Färbungen und Drucke besitzen klare Nuancen; insbesondere weisen die Färbungen und Drucke auf Cellulosefasermaterialien eine gute Lichtechtheit und insbesondere sehr gute Naßechtheiten, wie Wasch-, Walk-, Wasser-, Seewasser-, Überfärbe- und saure sowie alkalische Schweißechtheiten, desweiteren eine gute Plissierechtheit, Bügelechtheit und Reibechtheit auf.

Des weiteren können die erfindungsgemäßen Farbstoffmischungen auch für das faserreaktive Färben von Wolle Verwendung finden. Auch läßt sich filzfrei oder filzarm ausgerüstete Wolle (vgl. bspw. H. Rath, Lehrbuch der Textilchemie, Springer-Verlag, 3. Auflage (1972), S. 295-299, insbesondere die Ausrüstung nach dem sogenannten Hercosett-Verfahren (S. 298); J. Soc. Dyers and Coloirists 1972, 93-99, und 1975, 33-44) mit sehr guten Echtheitseigenschaften färben. Das Verfahren des Färbens auf Wolle erfolgt hierbei in üblicher und bekannter Färbeweise aus saurem Milieu. So kann man beispielsweise dem Färbebad Essigsäure und/oder Ammoniumsulfat oder Essigsäure und Ammoniumacetat oder Natriumacetat zufügen, um den gewünschten pH-Wert zu erhalten. Um eine brauchbare Egalität der Färbung zu erreichen, empfiehlt sich ein Zusatz an üblichen Egalisierhilfsmitteln, wie beispielsweise auf Basis eines Umsetzungsproduktes von Cyanurchlorid mit der dreifach molaren Menge einer Aminobenzolsulfonsäure und/oder einer Aminonaphthalinsulfonsäure oder auf Basis eines Umsetzungsproduktes von beispielsweise Stearylamin mit Ethylenoxid. So wird beispielsweise die erfindungsgemäße Farbstoffmischung bevorzugt zunächst aus saurem Färbebad mit einem pH von etwa 3,5 bis 5,5 unter Kontrolle des pH-Wertes dem Ausziehprozeß unterworfen und der pH-Wert sodann, gegen Ende der Färbezeit, in den neutralen und gegebenenfalls schwach alkalischen Bereich bis zu einem pH-Wert von 8,5 verschoben, um besonders zur Erzielung von hohen Farbtiefen die volle reaktive Bindung zwischen den Farbstoffen der erfindungsgemäßen Farbstoffmischungen und der Faser herbeizuführen. Gleichzeitig wird der nicht reaktiv gebundene Farbstoffanteil abgelöst.

Die hier beschriebene Verfahrensweise gilt auch zur Herstellung von Färbungen auf Fasermaterialien aus anderen natürlichen Polyamiden oder aus synthetischen Polyamiden und Polyurethanen. In der Regel wird das zu färbende Material bei einer Temperaturvon etwa 40°C in das Bad eingebracht, dort einige Zeit darin bewegt, das Färbebad dann auf den gewünschten schwach sauren, vorzugsweise schwach essigsauren, pH-Wert nachgestellt und die eigentliche Färbung bei einer Temperatur zwischen 60 und 98°C durchgeführt. Die Färbungen können aber auch bei Siedetemperatur oder in geschlossenen Färbeapparaturen bei Temperaturen bis zu 106°C ausgeführt werden. Da die Wasserlöslichkeit der erfindungsgemäßen Farbstoffmischungen sehr gut ist, lassen sie sich auch mit Vorteil bei üblichen kontinuierlichen Färbeverfahren einsetzen. Die Farbstärke der erfindungsgemäßen Farbstoffmischungen ist sehr hoch.

Die erfindungsgemäßen Farbstoffmischungen liefern auf den genannten Materialien, bevorzugt Fasermaterialien, klare, gelbstichig bis blaustichig rote Färbungen.

Die nachstehenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter. Die in den Beispielen formelmäßig beschriebenen Verbindungen sind in Form der freien Säuren angegeben; im allgemeinen werden sie in Form ihrer Salze, vorzugsweise Natrium- oder Kaliumsalze, hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen als solche oder in Form ihrer Salze, vorzugsweise Alkalimetallsalze, wie Natrium- oder Kaliumsalze, in die Synthese eingesetzt werden.

### Beispiel 1

Eine Lösung mit einem pH-Wert von 8,5 von 319,2 Teilen 1-Amino-8-naphthol-3,6-disulfosäure in 1000 Teilen Wasser wird mit etwa 300 Teilen Eis versetzt; unter guten Rühren bei 0°C werden 141,8 Teile Cyanurfluorid hinzugegeben, der Ansatz noch kurze Zeit nachgerührt und anschließend mit 90 Teilen Morpholin versetzt. Die Umsetzung erfolgt unter Einhaltung eines pH-Wertes zwischen 7,5 und 8,5 (bspw. durch Zugabe von Natriumhydrogencarbonat), wobei man den Ansatz sich langsam auf bis zu 15°C erwärmen läßt und ihn noch einige Zeit nachrührt.

In diesen Syntheseansatz gibt man sodann etwa 2000 Teile einer auf üblichem Wege hergestellten schwefelsauren Lösung von zwei Diazoniumsalzen aus 140,7 Teilen 4-(β-Sulfatoethylsulfonyl)-anilin und 111,6 Teilen 1-Sulfo-2-aminonaphthalin und führt die beiden Kupplungsreaktionen bei einem pH-Wert zwischen 3,0 und 6,5 und bei einer Temperatur von etwa 15 bis 20°C unter gutem Rühren durch. Nach Beendigung der Kupplungsreaktionen stellt man mittels Natriumcarbonat einen pH-Wert zwischen 7,0 und 7,5 ein, klärt den Reaktionsansatz und sprühtrocknet das Filtrat.

Es wird ein elektrolytsalzhaltiges (vorwiegend natriumchlorid- und natriumsulfathaltiges) Pulver erhalten, das zu 60 % die Alkalimetallsalze der Farbstoffe der Formeln (A) und (B) 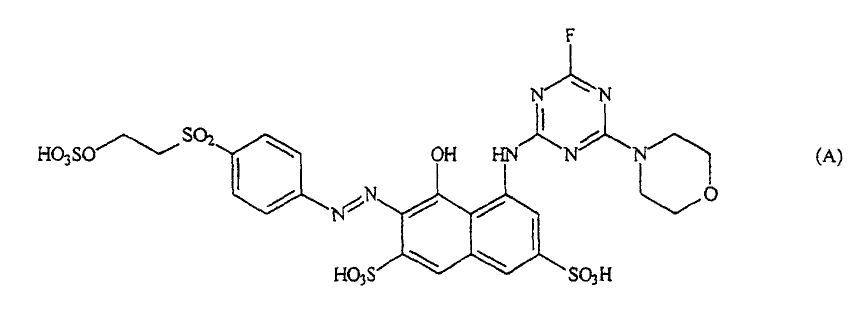 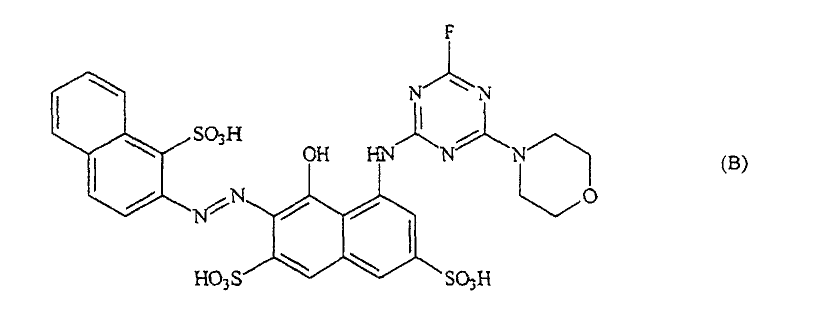 in etwa gleichen Gewichtsteilen enthält. Die erfindungsgemäße Farbstoffmischung zeigt sehr gute Farbstoffeigenschaften und liefert nach den in der Technik üblichen Anwendungs- und Fixiermethoden für faserreaktive Farbstoffe auf den in der Beschreibung genannten Materialien, wie Cellulosefasermaterialien, insbesondere Baumwolle und Viskose, farbstarke rote Färbungen und Drucke mit sehr guten Echtheitseigenschaften, von denen vor allem die sehr guten Wasch-, Licht-, Alkali-, Säure-, Wasser-, Meerwasser-, Schweiß- und Reibechtheiten hervorgehoben werden können. Die Färbungen zeichnen sich weiterhin durch ihren hohen Fixiergrad und guten Aufbau auf den Cellulosematerialien aus.

### Beispiel 2

Zur Herstellung einer erfindungsgemäßen Farbstoffmischung verfährt man gemäß den Angaben des Beispieles 1, geht jedoch von einer Diazoniumsalzlösung von 2 Diazoniumsalzen aus, die aus 205,7 Teilen 6-(β-Sulfatoethylsulfonyl)-1-sulfo-2-aminonaphthalin und 111,6 Teilen 1-Sulfo-2-aminonaphthalin hergestellt wurde. Es wird ein elektrolythaltiges Farbstoffpulver mit einem Farbstoffgehalt von etwa 65 % der Farbstoffe der Formel (B) und der Formel (C) 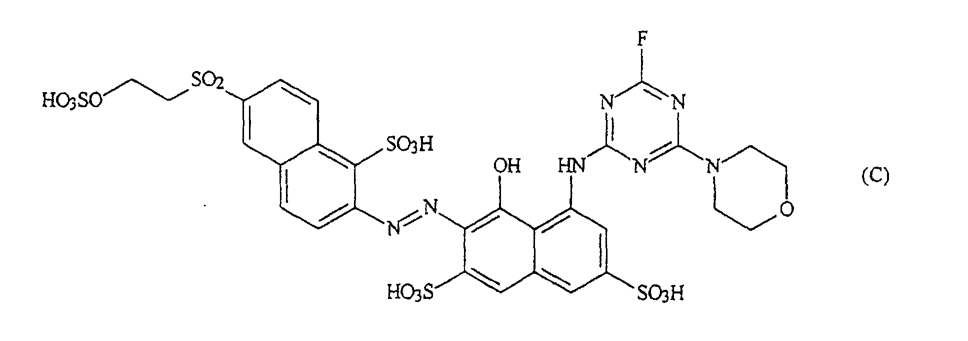 erhalten, wobei der Farbstoff (B) zu etwa 30 % und der Farbstoff- (C) zu etwa 35 % enthalten ist.
Die erfindungsgemäße Farbstoffmischung liefert nach den in der Technik üblichen Färbe- und Druckmethoden auf die in der Beschreibung genannten Fasermaterialien, wie beispielsweise Baumwolle, blaustichig rote Färbungen mit gutem Farbaufbau und hervorragenden Echtheiten gegenüber chlorhaltigem Wasser bei hohem Fixiergrad.

### Beispiel 3

319 Teile 1-Amino-8-naphthol-3,6-disulfonsäure, in 1000 Teilen Wasser suspendiert, werden durch Zugabe von 90 Teilen Morpholin und 90 Teilen Natriumhydrogencarbonat gelöst; etwa 500 Teile Eis werden zugegeben, und in einem Reaktor werden in diese alkalische Lösung unter hohem Druck etwa 142 Teile Cyanurfluorid eingesprüht, so daß keine Rückvermischung erfolgt.

Zu der erhaltenen, auf einen pH-Wert von etwa 8,5 gestellten Suspension des Produktes werden etwa 2000 Teile einer auf üblichem Wege hergestellten salzsauren wäßrigen Suspension zweier Diazoniumsalze aus 62,1 Teilen 3-(2',4'-Difluor-pyrimidin-6'-yl)-amino-6-sulfo-aminobenzol und 140,7 Teilen 4-(β-Sulfatoethylsulfonyl)-anilin gegeben, wobei die Kupplungsreaktionen der beiden Diazoniumverbindungen mit der Kupplungskomponente bei einem pH-Wert zwischen 4,0 und 7,5 und einer Temperatur von etwa 15°C während etwa zwei Stunden durchgeführt wird. Der erhaltene Syntheseansatz wird anschließend klärfiltriert und das Filtrat mit den beiden Farbstoffen der Formeln (A) und (D) (beide in Form der Natriumsalze) 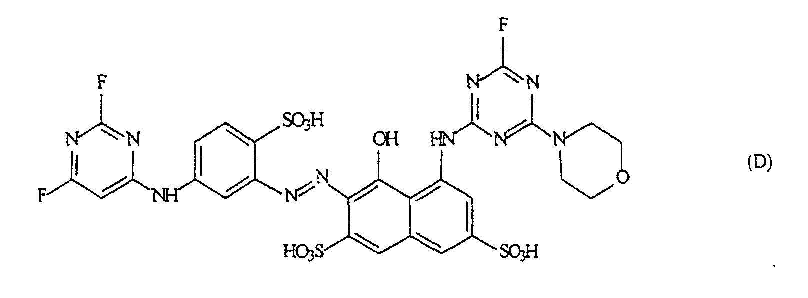 einer Sprühgranulierung unterworfen. Die erhaltene elektrolytsalzhaltige Farbstoffmischung enthält den Farbstoff (A) zu etwa 30 % und den Farbstoff (D) zu etwa 35 %. Sie zeichnet sich durch ausgezeichnete Farbstoffeigenschaften und liefert nach den in der Technik üblichen Anwendungs- und Fixiermethoden für faserreaktive Farbstoffe auf den in der Beschreibung genannten Materialien, wie Cellulosefasermaterialien, insbesondere Baumwolle und Viskose, farbstarke rote Färbungen mit sehr guten Echtheitseigenschaften, von denen vor allem die sehr guten Wasch-, Licht-, Alkali-, Säure-, Wasser-, Meerwasser-, Schweiß- und Reibechtheiten hervorgehoben werden können. Die Farbstoffmischung zeichnet sich weiterhin durch ihre geringe Abhängikeit von wechseldnden Färbeparametern sowie einen hohen Fixiergrad und guten Aufbau auf den Cellulosematerialien aus

### Beispiele 3 bis 20

In den nachfolgenden Tabellenbeispielen sind weitere erfindungsgemäße Farbstoffmischungen mit den Farbstoffen entsprechend den allgemeinen Formeln (Y) und (Z) 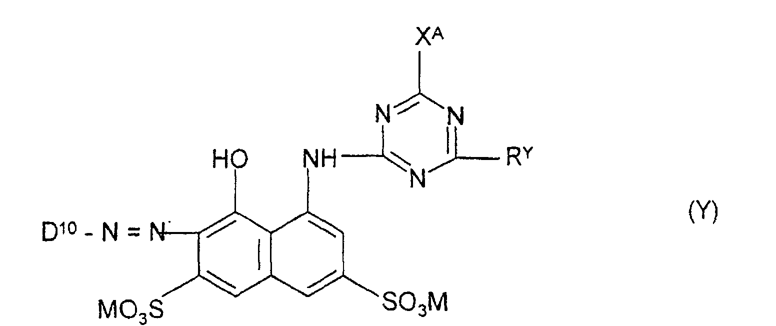 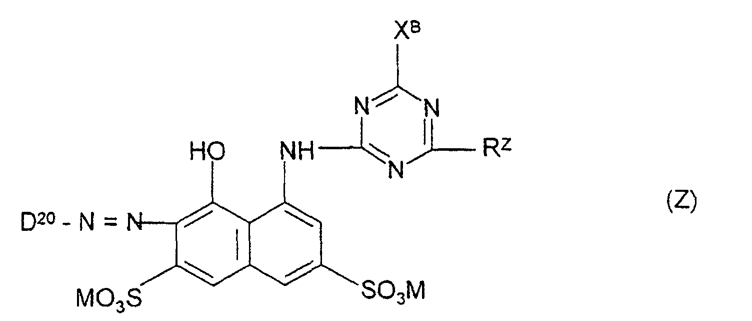 (wobei M die in der Beschreibung genannte Bedeutung besitzt) anhand der Komponenten in dem jeweiligen Tabellenbeispiel beschrieben. Sie lassen sich in erfindungsgemäßer Weise entweder durch mechanische Mischung der Einzelfarbstoffe oder aber auf chemischem Wege, beispielsweise analog einem der obigen Ausführungsbeispiele, mit Hilfe ihrer Ausgangskomponenten herstellen.

Die erfindungsgemäßen Farbstoffmischungen besitzen sehr gute anwendungstechnische Eigenschaften und liefern auf den in der Beschreibung genannten Materialien, wie insbesondere Cellulosefasermaterialien, nach den in der Technik üblichen Anwendungsmethoden in der Färberei und Druckerei, vorzugsweise nach den in der Technik üblichen Applikations- und Fixiermethoden für faserreaktive Farbstoffe, farbstarke Färbungen und Drucke mit guten Echtheitseigenschaften und einem guten Farbaufbau in dem in dem jeweiligen Tabellenbeispiel angegebenen Farbton. In der Rubrik MV wird das Mischungsverhältnis in Gew.-% der beiden Farbstoffe zueinander angegeben.

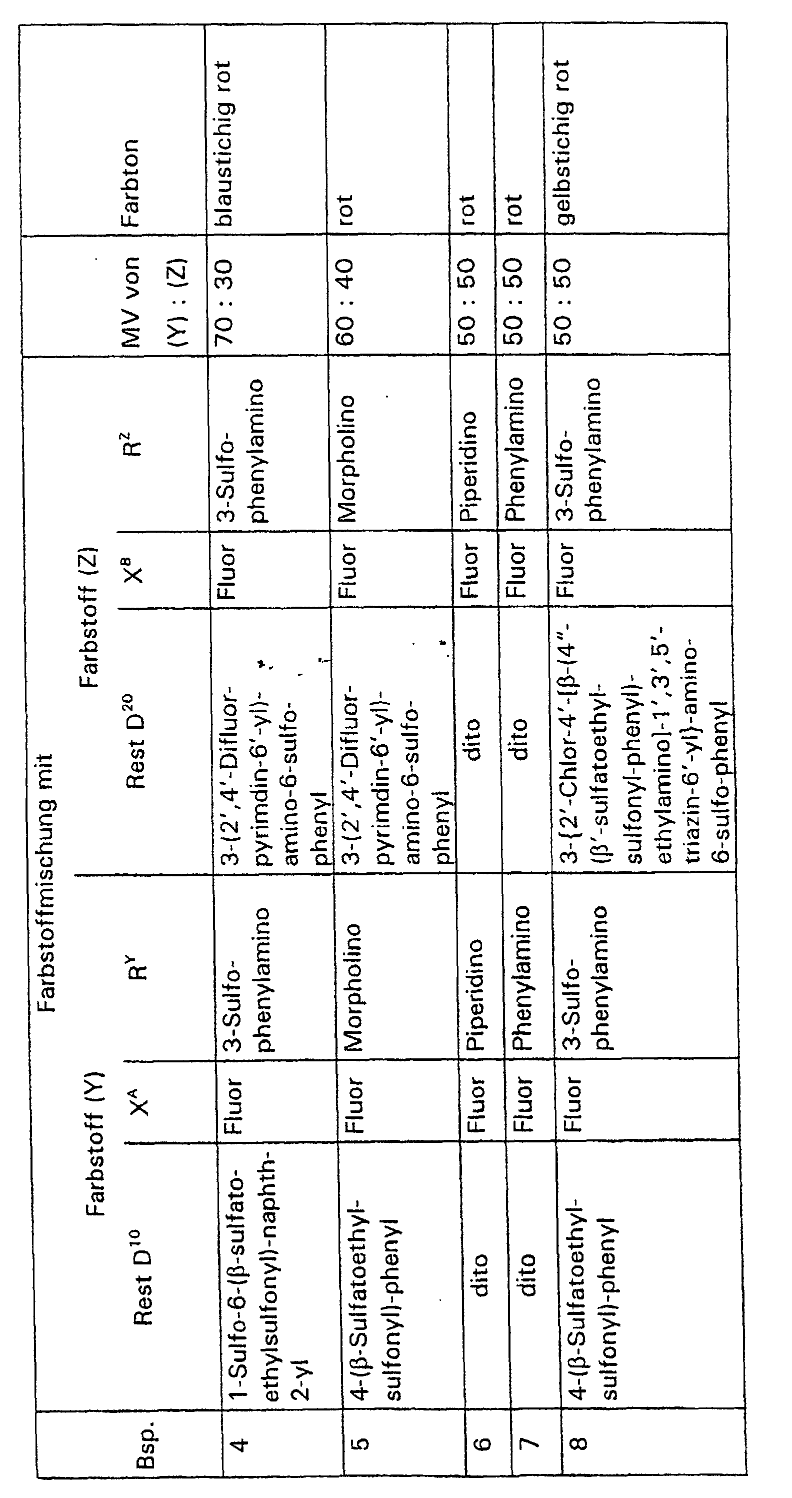

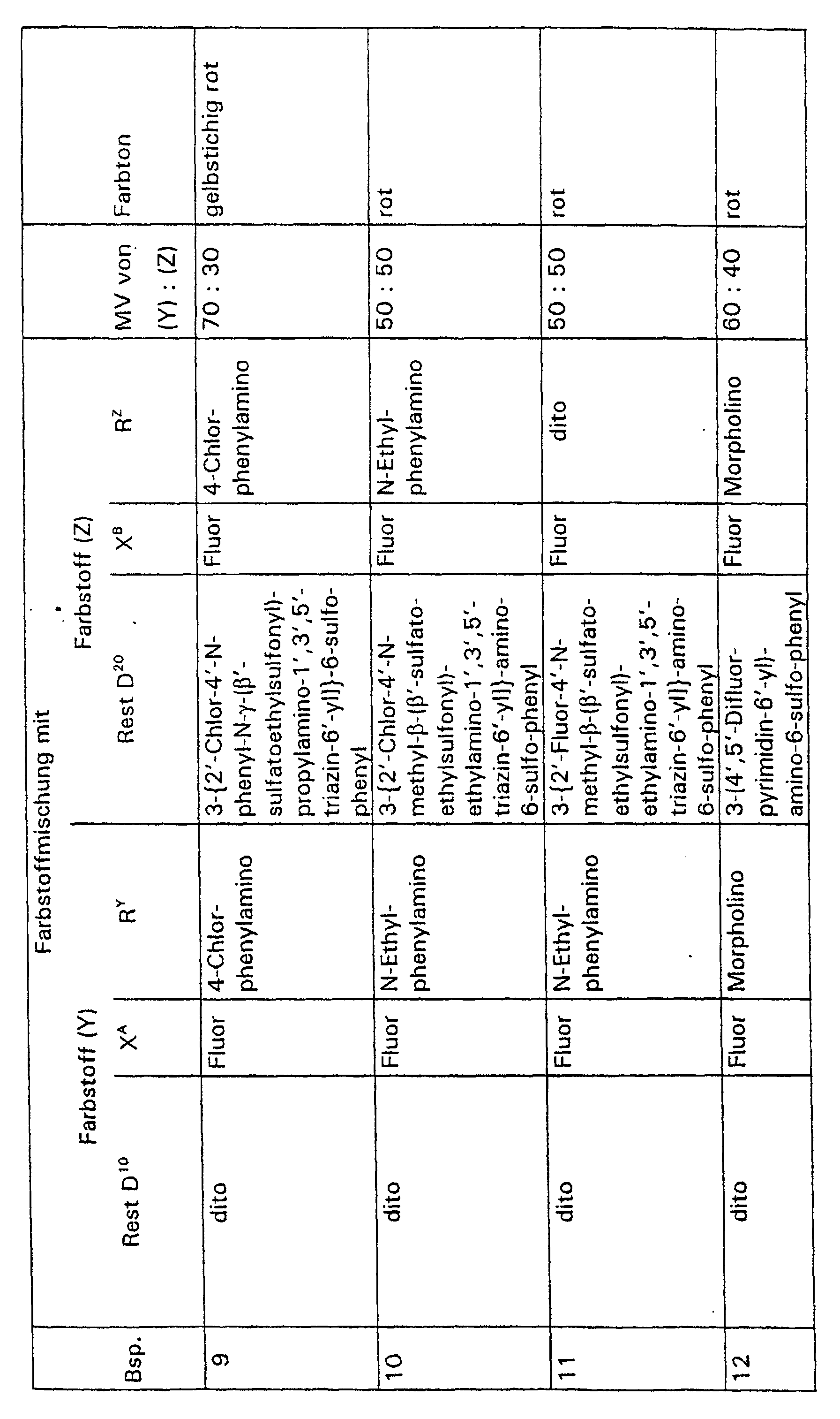

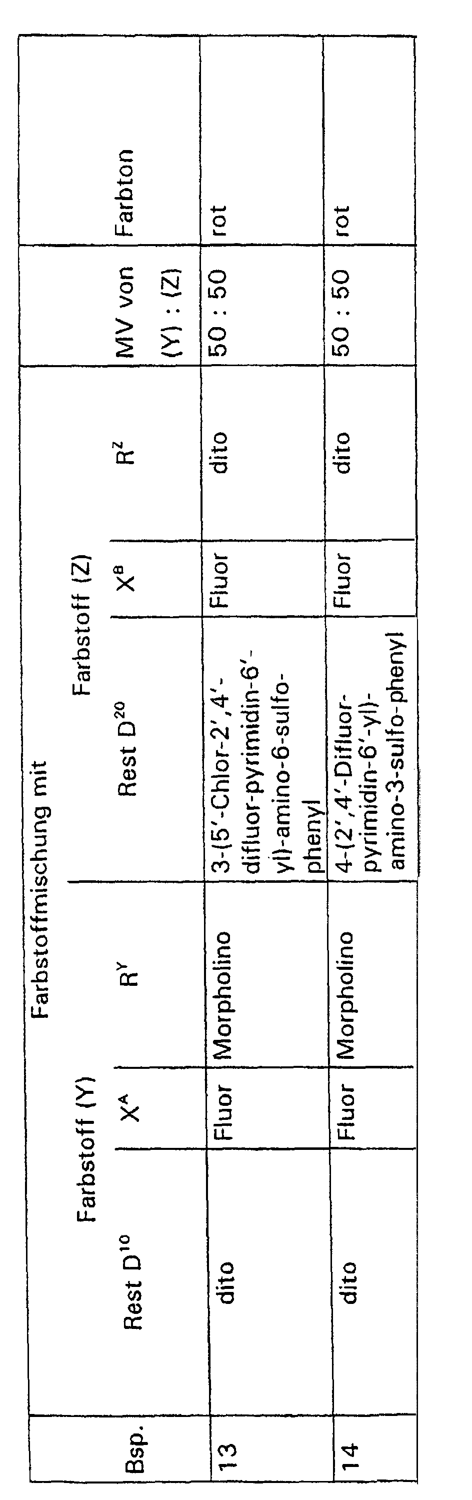

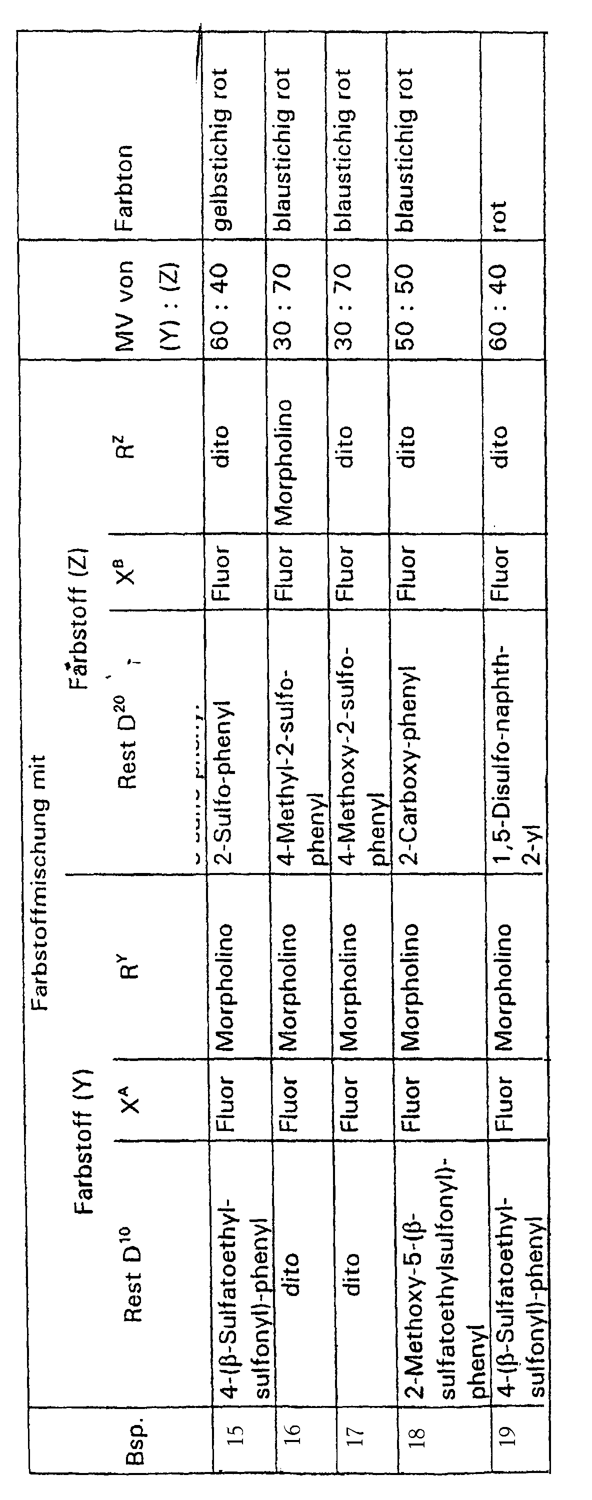

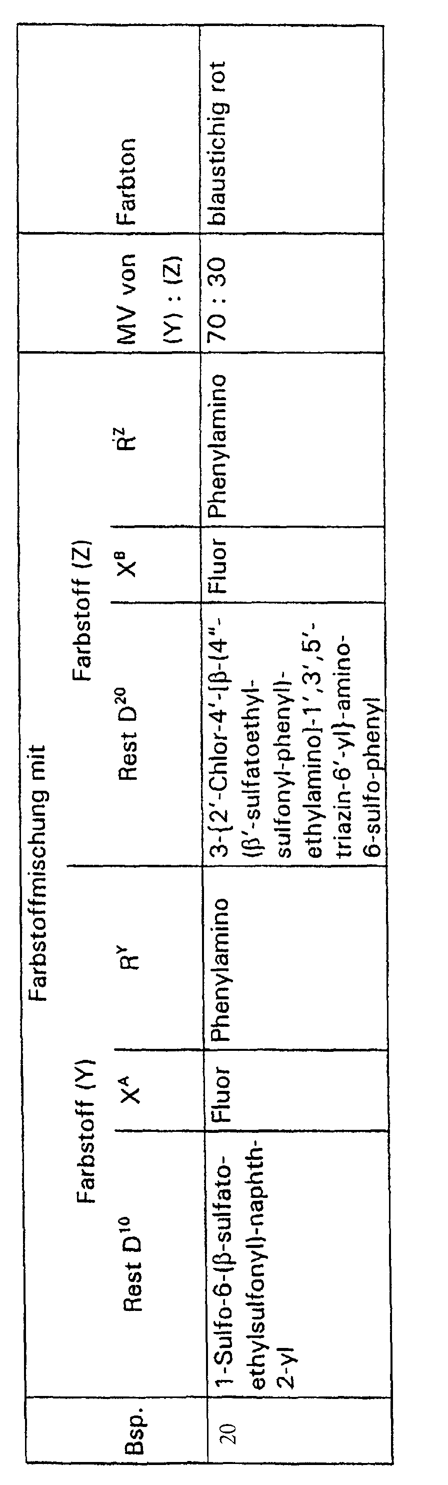

## Patentansprüche

1. Farbstoffmischung, **gekennzeichnet durch** den Gehalt von einem oder mehreren, wie zwei oder drei, Farbstoffen der allgemeinen Formel (1) und einem oder mehreren, wie zwei, drei oder vier, Farbstoffen, die aus der Gruppe der Farbstoffe der allgemeinen Formeln (2) oder (3) oder (2) und (3) ausgewählt sind: 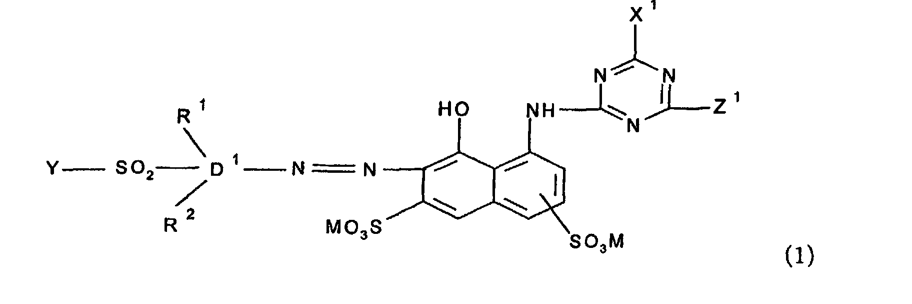 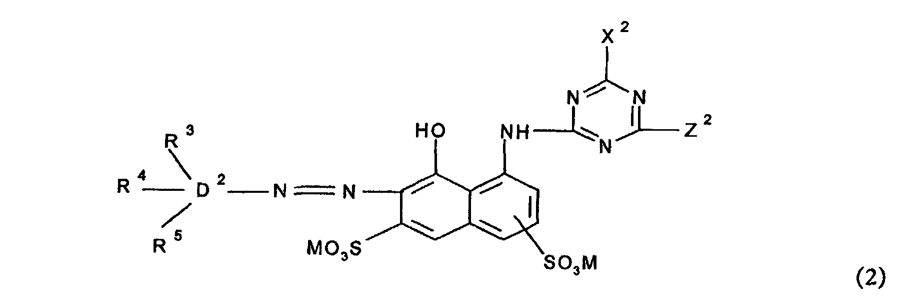 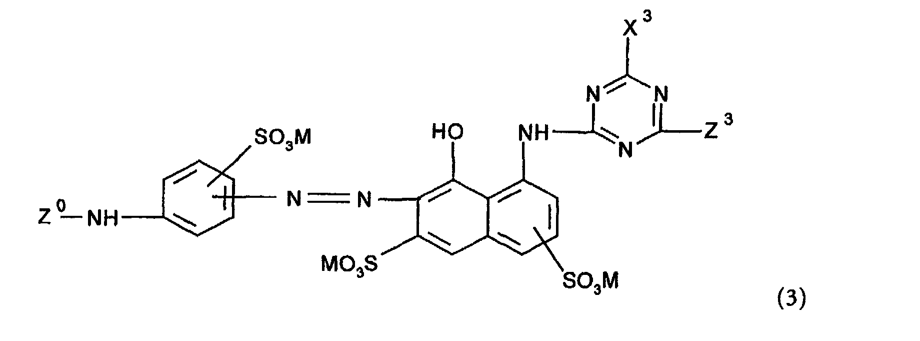 in welchen bedeuten:
M ist Wasserstoff oder ein Alkalimetall;
D1 ist ein Benzol- oder Naphthalinrest;
D2 ist ein Benzol- oder Naphthalinrest;
Y ist Vinyl oder ist Ethyl, das in β-Stellung **durch** einen alkalisch eliminierbaren Substituenten substituiert ist;
R¹ ist Wasserstoff, Alkyl von 1 bis 4 C-Atomen oder Alkoxy von 1 bis 4 C-Atomen, falls D¹ für einen Benzolrest steht, oder ist Wasserstoff oder Sulfo, falls D¹ einen Naphthalinrest bedeutet;
R² ist Wasserstoff, Alkyl von 1 bis 4 C-Atomen oder Alkoxy von 1 bis 4 C-Atomen, falls D¹ für einen Benzolrest steht, oder ist Wasserstoff oder Sulfo, falls D¹ einen Naphthalinrest bedeutet;
R³ ist Wasserstoff, Alkyl von 1 bis 4 C-Atomen, Alkoxy von 1 bis 4 C-Atomen, Carboxy oder Sulfo, falls D² einen Benzolrest bedeutet, oder ist Wasserstoff oder Sulfo, falls D² einen Naphthalinrest bedeutet;
R⁴ ist Wasserstoff, Alkyl von 1 bis 4 C-Atomen, Alkoxy von 1 bis 4 C-Atomen oder Sulfo, falls D² für einen Benzolrest steht, oder ist Wasserstoff oder Sulfo, falls D² einen Naphthalinrest bedeutet;
R⁵ ist Wasserstoff, Chlor, Brom oder Sulfo, falls D² für einen Benzolrest steht, oder ist Wasserstoff oder Sulfo, falls D² einen Naphthalinrest bedeutet;
X¹ ist Fluor;
X² ist Fluor, Brom oder Chlor;
Z¹ ist eine Gruppe der allgemeinen Formel (4a) oder (4b) 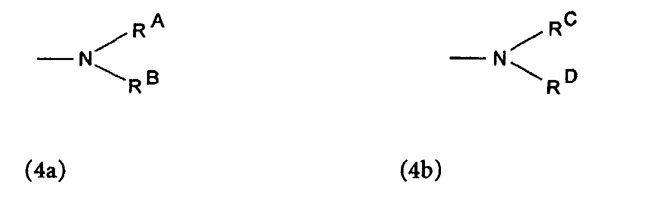
in welchen
R^{A} Wasserstoff oder Alkyl von 1 bis 4 C-Atomen ist, das substituiert sein kann,
R^{B} Wasserstoff oder Alkyl von 1 bis 4 C-Atomen ist, das substituiert sein kann, oder die Gruppe -NRARB bildet den Rest eines 5- bis 7-gliedrigen gesättigten Heterocyclus, wobei der Alkylenrest dieses Heterocyclus noch **durch** 1 oder 2 Heterogruppen unterbrochen sein kann,
R^{C} Wasserstoff oder Alkyl von 1 bis 4 C-Atomen ist, das substituiert sein kann, und
R^{D} Wasserstoff oder Phenyl ist, das **durch** 1 oder 2 Substituenten aus der Gruppe Alkyl von 1 bis 4 C-Atomen, Alkoxy von 1 bis 4 C-Atomen, Carboxy, Sulfo und Chlor substituiert sein kann;
Z² hat eine der für Z¹ genannten Bedeutungen;
X³ ist Fluor, Brom oder Chlor;
Z³ hat eine der für Z¹ genannten Bedeutungen;
Z⁰ ist eine Gruppe der allgemeinen Formel (5a), (5b), (5c) oder (5d) 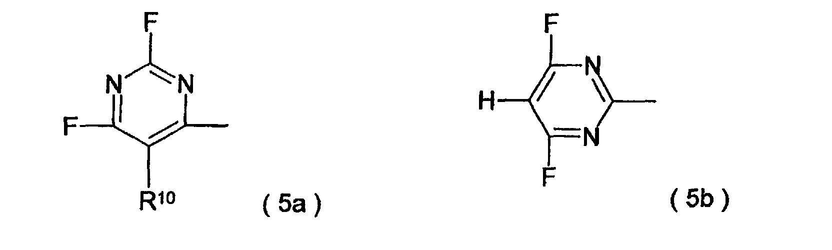 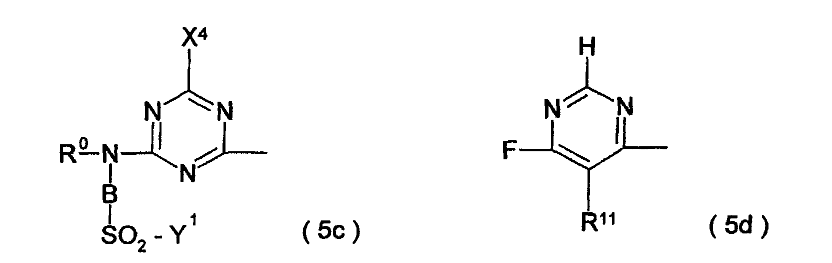
in welchen
R¹⁰ Wasserstoff oder Chlor ist,
R¹¹ Wasserstoff, Chlor oder Fluor ist,
R⁰ Wasserstoff, Alkyl von 1 bis 4 C-Atomen, Phenyl oder **durch** Chlor, Sulfo, Methyl, Ethyl, Methoxy, Ethoxy oder Carboxy substituiertes Phenyl ist,
X⁴ eine der Bedeutungen von X¹ hat,
Y¹ eine der Bedeutungen von Y hat und
B Alkylen von 2 bis 6 C-Atomen ist oder Alkylen von 3 bis 8 C-Atomen ist, das **durch** 1 oder 2 Heterogruppen unterbrochen ist;
die eine Gruppe -SO3M in den Sulfo-aminonaphthol-Resten der Formeln (1), (2), (3) steht in meta- oder para-Stellung zur Gruppe NH an den Naphthalinrest gebunden; die Azogruppe in Formel (3) steht in meta- oder para-Stellung zur Gruppe Z⁰-NH- an den Benzolkern gebunden.
Y ist Vinyl oder ist Ethyl, das in β-Stellung **durch** einen alkalisch eliminierbaren Substituenten substituiert ist;
R¹ ist Wasserstoff, Alkyl von 1 bis 4 C-Atomen oder Alkoxy von 1 bis 4 C-Atomen, falls D¹ für einen Benzolrest steht, oder ist Wasserstoff oder Sulfo, falls D¹ einen Naphthalinrest bedeutet;
R² ist Wasserstoff, Alkyl von 1 bis 4 C-Atomen oder Alkoxy von 1 bis 4 C-Atomen, falls D¹ für einen Benzolrest steht, oder ist Wasserstoff oder Sulfo, falls D¹ einen Naphthalinrest bedeutet;
R³ ist Wasserstoff, Alkyl von 1 bis 4 C-Atomen, Alkoxy von 1 bis 4 C-Atomen, Carboxy oder Sulfo, falls D² einen Benzolrest bedeutet, oder ist Wasserstoff oder Sulfo, falls D² einen Naphthalinrest bedeutet;
R⁴ ist Wasserstoff, Alkyl von 1 bis 4 C-Atomen, Alkoxy von 1 bis 4 C-Atomen oder Sulfo, falls D² für einen Benzolrest steht, oder ist Wasserstoff oder Sulfo, falls D² einen Naphthalinrest bedeutet;
R⁵ ist Wasserstoff, Chlor, Brom oder Sulfo, falls D² für einen Benzolrest steht, oder ist Wasserstoffoder Sulfo, falls D² einen Naphthalinrest bedeutet;
X¹ ist Fluor;
X² ist Fluor, Brom oder Chlor;
Z¹ ist eine Gruppe der allgemeinen Formel (4a) oder (4b) 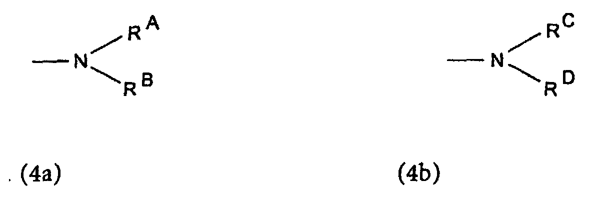
in welchen
R^{A} Wasserstoff oder Alkyl von 1 bis 4 C-Atomen ist, das substituiert sein kann,
R^{B} Wasserstoff oder Alkyl von 1 bis 4 C-Atomen ist, das substituiert sein kann, oder die Gruppe -NRARB bildet den Rest eines 5- bis 7-gliedrigen gesättigten Heterocyclus, wobei der Alkylenrest dieses Heterocyclus noch **durch** 1 oder 2 Heterogruppen unterbrochen sein kann,
R^{C} Wasserstoff oder Alkyl von 1 bis 4 C-Atomen ist, das substituiert sein kann, und
R^{D} Wasserstoff oder Phenyl ist, das **durch** 1 oder 2 Substituenten aus der Gruppe Alkyl von 1 bis 4 C-Atomen, Alkoxy von 1 bis 4 C-Atomen, Carboxy, Sulfo und Chlor substituiert sein kann;
Z² hat eine der für Z¹ genannten Bedeutungen;
X³ ist Fluor, Brom oder Chlor;
Z³ hat eine der für Z¹ genannten Bedeutungen;
Z⁰ ist eine Gruppe der allgemeinen Formel (5a), (5b), (5c) oder (5d) 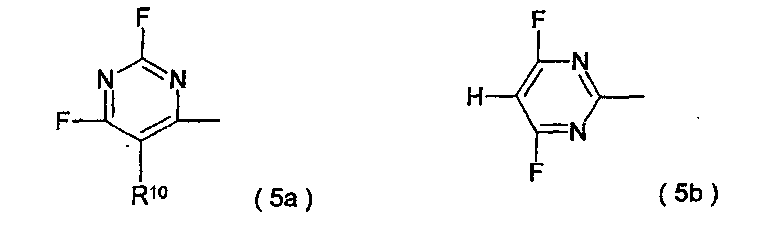 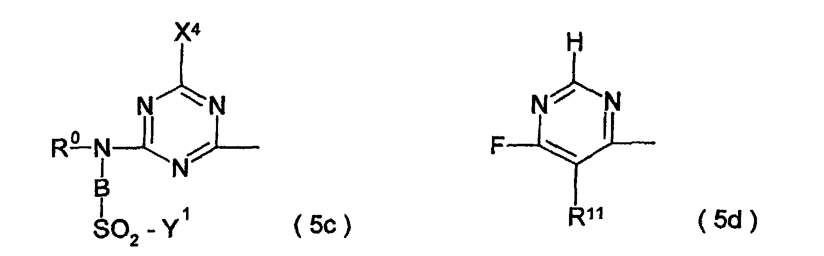
in welchen
R¹⁰ Wasserstoff oder Chlor ist,
R¹¹ Wasserstoff, Chlor oder Fluor ist,
R⁰ Wasserstoff, Alkyl von 1 bis 4 C-Atomen, Phenyl oder **durch** Chlor, Sulfo, Methyl, Ethyl, Methoxy, Ethoxy oder Carboxy substituiertes Phenyl ist,
X⁴ eine der Bedeutungen von X¹ hat,
Y¹ eine der Bedeutungen von Y hat und
B Alkylen von 2 bis 6 C-Atomen ist oder Alkylen von 3 bis 8 C-Atomen ist, das **durch** 1 oder 2 Heterogruppen unterbrochen ist;
die eine Gruppe -SO3M in den Sulfo-aminonaphthol-Resten der Formeln (1), (2), (3) steht in meta- oder para-Stellung zur Gruppe NH an den Naphthalinrest gebunden; die Azogruppe in Formel (3) steht in meta- oder para-Stellung zur Gruppe Z⁰-NH- an den Benzolkern gebunden.

2. Farbstoffmischung nach Anspruch 1, **gekennzeichnet durch** den Gehalt eines oder mehrerer Farbstoffe der allgemeinen Formel (1) und eines oder mehrerer Farbstoffe der allgemeinen Formel (2) oder (3) oder (2) und (3) im Mischungsverhältnis von 90 : 10 Gew.-% bis 10 : 90 Gew.-%.

3. Farbstoffmischung nach Anspruch 1, **gekennzeichnet durch** den Gehalt eines oder mehrerer Farbstoffe der allgemeinen Formel (1) und eines oder mehrerer Farbstoffe der allgemeinen Formel (2) oder (3) oder (2) und (3) im Mischungsverhältnis von 70 : 30 Gew.-% bis 30 : 70 Gew.-%.

4. Farbstoffmischung nach Anspruch 1, **gekennzeichnet durch** den Gehalt eines oder mehrerer Farbstoffe der allgemeinen Formel (1) und eines oder mehrerer Farbstoffe der allgemeinen Formel (2) oder (3) oder (2) und (3) im Mischungsverhältnis von 60 : 40 Gew.-% bis 40 : 60 Gew.-%.

5. Farbstoffmischung nach mindestens einem der Ansprüche 1 bis 4, **dadurch gekennzeichnet, daß** D¹ oder D² oder beide einen Benzolkern bedeuten.

6. Farbstoffmischung nach mindestens einem der Ansprüche 1 bis 5, **dadurch gekennzeichnet, daß** R¹ Wasserstoff, Methyl oder Methoxy ist und R² Wasserstoff, Methyl oder Methoxy bedeutet.

7. Farbstoffmischung nach mindestens einem der Ansprüche 1 bis 5, **dadurch gekennzeichnet, daß** R¹ und R² beide Wasserstoff sind.

8. Farbstoffmischung nach mindestens einem der Ansprüche 1 bis 4, **dadurch gekennzeichnet, daß** D² einen Naphthalinrest bedeutet, R³ Wasserstoff ist, R⁴ Wasserstoff oder Sulfo ist und R⁵ Wasserstoff oder Sulfo bedeutet.

9. Farbstoffmischung nach mindestens einem der Ansprüche 1 bis 8, **dadurch gekennzeichnet, daß** X¹ und X² beide Fluor sind.

10. Verwendung einer Farbstoffmischung von Anspruch 1 zum Färben von hydroxy- und/oder carbonamidgruppenhaltigem Material, insbesondere Fasermaterial.

11. Verfahren zum Färben von hydroxy- und/oder carbonamidgruppenhaltigem Material, insbesondere Fasermaterial, bei welchem man einen oder mehrere Farbstoffe auf das Material aufbringt und diese auf dem Material mittels Wärme oder mit Hilfe eines alkalisch wirkenden Mittels oder mittels beider Maßnahmen fixiert, **dadurch gekennzeichnet, daß** man als Farbstoffe eine Farbstoffmischung von Anspruch 1 oder eine oder mehrere Farbstoffe der in Anspruch 1 definierten allgemeinen Formel (1) und einen oder mehrere Farbstoffe der in Anspruch 1 definierten allgemeinen Formel (2) oder (3) oder (2) und (3) einzeln zusammen einsetzt.

## Claims

1. A dye mixture comprising one or more, such as two or three, dyes of the general formula (1), and one or more, such as two, three or four, dyes selected from the group of the dyes of the general formulae (2) or (3) or (2) and (3) : 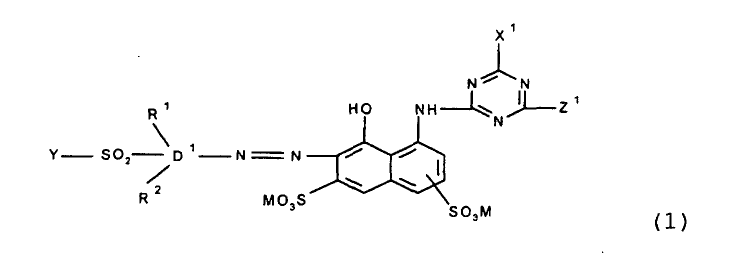 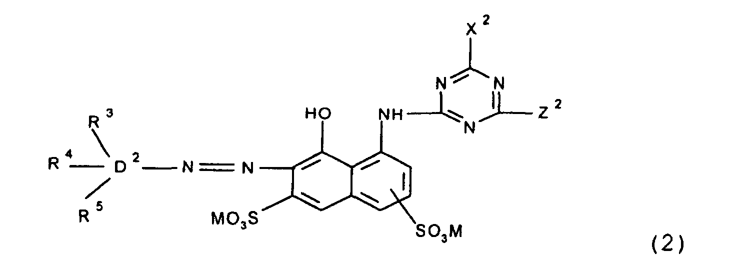 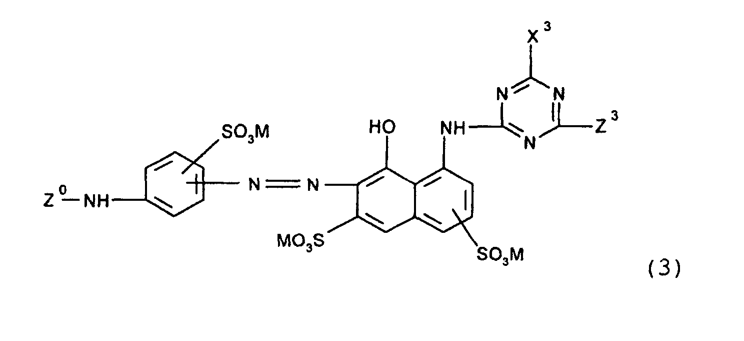 where:
M is hydrogen or an alkali metal;
D¹ is a benzene or naphthalene radical;
D² is a benzene or naphthalene radical;
Y is vinyl or is ethyl which is substituted in the β-position by an alkali-eliminable substituent;
R¹ is hydrogen, alkyl of 1 to 4 carbon atoms, or alkoxy of 1 to 4 carbon atoms, when D¹ is a benzene radical, or is hydrogen or sulfo, when D¹ is a naphthalene radical;
R² is hydrogen, alkyl of 1 to 4 carbon atoms, or alkoxy of 1 to 4 carbon atoms, when D¹ is a benzene radical, or is hydrogen or sulfo, when D¹ is a naphthalene radical;
R³ is hydrogen, alkyl of 1 to 4 carbon atoms, alkoxy of 1 to 4 carbon atoms, carboxyl or sulfo, when D² is a benzene radical, or is hydrogen or sulfo, when D² is a naphthalene radical;
R⁴ is hydrogen, alkyl of 1 to 4 carbon atoms, alkoxy of 1 to 4 carbon atoms, or sulfo, when D² is a benzene radical, or is hydrogen or sulfo, when D² is a naphthalene radical;
R⁵ is hydrogen, chlorine, bromine or sulfo when D² is a benzene radical, or is hydrogen or sulfo when D² is a naphthalene radical;
X¹ is fluorine
X² is fluorine, bromine or chlorine;
Z¹ is a group of the general formula (4a) or (4b) 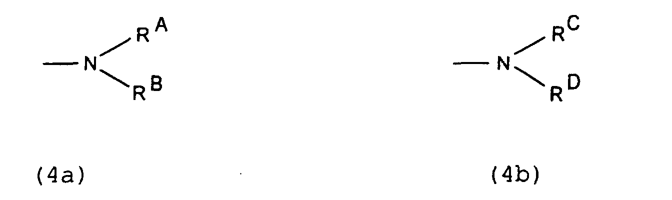
where
R^{A} is hydrogen or alkyl of 1 to 4 carbon atoms, which may be substituted,
R^{B} is hydrogen or alkyl of 1 to 4 carbon atoms, which may be substituted, or
the group -NR^{A}R^{B} forms the radical of a 5- to 7- membered saturated heterocycle wherein the alkylene radical of this heterocycle may be additionally interrupted by 1 or 2 hetero groups,
R^{C} is hydrogen or alkyl of 1 to 4 carbon atoms, which may be substituted, and
R^{D} is hydrogen or phenyl, which may be substituted by 1 or 2 substituents selected from the group consisting of alkyl of 1 to 4 carbon atoms, alkoxy of 1 to 4 carbon atoms, carboxyl, sulfo and chlorine;
Z² has one of the meanings mentioned for Z¹ ;
X³ is fluorine, bromine or chlorine;
Z³ has one of the meanings mentioned for Z ;
Z⁰ is a group of the general formula (5a), (5b), (5c) or (5d) 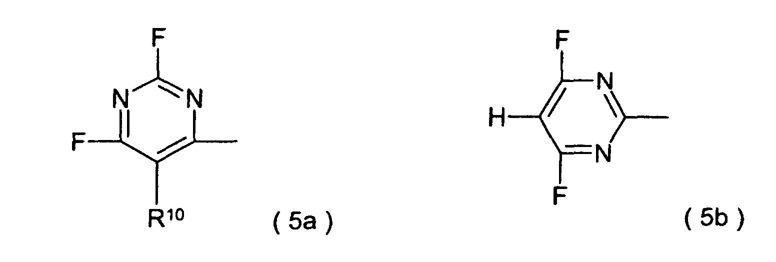 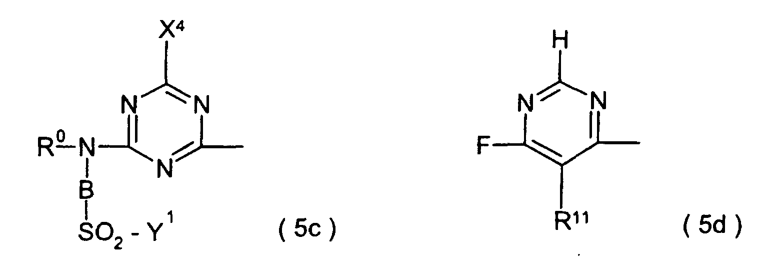
where
R¹⁰ is hydrogen or chlorine;
R¹¹ is hydrogen, chlorine or fluorine;
R⁰ is hydrogen, alkyl of 1 to 4 carbon atoms, phenyl or chlorine-, sulfo-, methyl-, ethyl-, methoxy-, ethoxy- or carboxyl-substituted phenyl;
X⁴ has one of the meanings of X¹;
Y¹ has one of the meanings of Y; and
B is alkylene of 2 to 6 carbon atoms, or is alkylene of 3 to 8 carbon atoms which is interrupted by 1 or 2 hetero groups;
the one -SO₃M group in the sulfoaminonaphthol radicals of the formulae (1), (2), (3) is attached to the naphthalene radical in a position which is meta or para relative to the NH group;
the azo group in the formula (3) is attached to the benzene nucleus in a position which is meta or para relative to the Z⁰-NH- group.

2. A dye mixture as claimed in claim 1, comprising one or more dyes of the general formula (1) and one or more dyes of the general formula (2) or (3) or (2) and (3) in a mixing ratio of 90 : 10% by weight to 10 : 90% by weight.

3. A dye mixture as claimed in claim 1, comprising one or more dyes of the general formula (1) and one or more dyes of the general formula (2) or (3) or (2) and (3) in a mixing ratio of 70 : 30% by weight to 30 : 70% by weight.

4. A dye mixture as claimed in claim 1, comprising one or more dyes of the general formula (1) and one or more dyes of the general formula (2) or (3) or (2) and (3) in a mixing ratio of 60 : 40% by weight to 40 : 60% by weight.

5. A dye mixture as claimed in at least one of claims 1 to 4, wherein D¹ or D² or both are a benzene nucleus.

6. A dye mixture as claimed in at least one of claims 1 to 5, wherein R¹ is hydrogen, methyl or methoxy and R² is hydrogen, methyl or methoxy.

7. A dye mixture as claimed in at least one of claims 1 to 5, wherein R¹ and R² are both hydrogen.

8. A dye mixture as claimed in at least one of claims 1 to 4, wherein D² is a naphthalene radical, R³ is hydrogen, R⁴ is hydrogen or sulfo and R⁵ is hydrogen or sulfo.

9. A dye mixture as claimed in at least one of claims 1 to 8, wherein X¹ and X² are both fluorine.

10. The use of a dye mixture of claim 1 for dyeing hydroxyl- and/or carboxamido-containing material, especially fiber material.

11. A process for dyeing hydroxyl- and/or carboxamido-containing material, especially fiber material, by applying one or more dyes to the material and fixing them on the material by means of heat or with an alkaline agent or by means of both measures, which comprises using as dyes a dye mixture of claim 1 or one or more dyes of the general formula (1) defined in claim 1 and one or more dyes of the general formula (2) or (3) or (2) and (3) defined in claim 1 individually together.

## Revendications

1. Mélange de colorants, **caractérisé par** la teneur en un ou plusieurs, comme deux ou trois, colorants de formule générale (1) et en un ou plusieurs, comme deux, trois ou quatre, colorants qui sont choisis parmi le groupe des colorants de formules générales (2) ou (3) ou (2) et (3) : 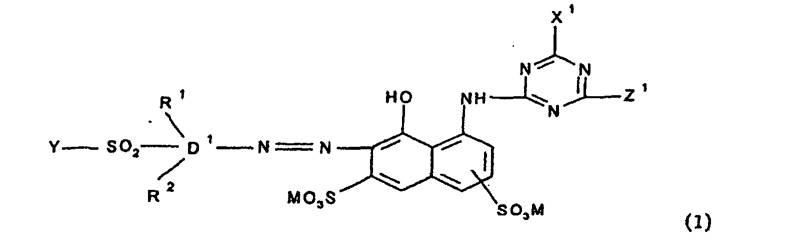 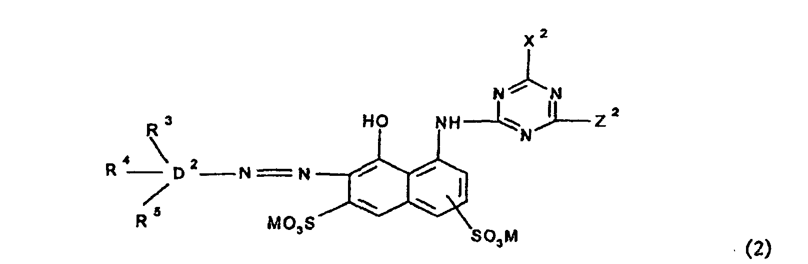 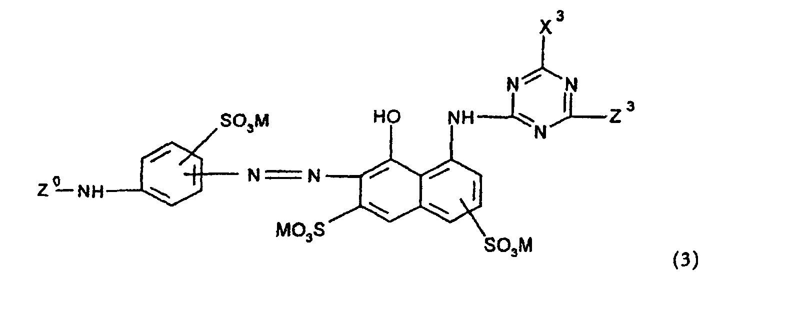 dans lesquelles:
M représente un hydrogène ou un métal alcalin;
D1 représente un radical benzène ou naphtalène;
D2 représente un radical benzène ou naphtalène;
Y représente un vinyle ou un éthyle, qui est substitué en position β par un substituant pouvant être éliminé en milieu alcalin;
R¹ représente un hydrogène, un alkyle ayant de 1 à 4 atomes de carbone ou un alcoxy ayant de 1 à 4 atomes de carbone, si D¹ représente un radical benzène, ou représente un hydrogène ou un sulfo, si D¹ représente un radical naphtalène;
R² représente un hydrogène, un alkyle ayant de 1 à 4 atomes de carbone ou un alcoxy ayant de 1 à 4 atomes de carbone, si D¹ représente un radical benzène, ou représente un hydrogène ou un sulfo, si D¹ représente un radical naphtalène;
R³ représente un hydrogène, un alkyle ayant de 1 à 4 atomes de carbone, un alcoxy ayant de 1 à 4 atomes de carbone, un carboxy ou un sulfo, si D² représente un radical benzène, ou représente un hydrogène ou un sulfo, si D² représente un radical naphtalène;
R⁴ représente un hydrogène, un alkyle ayant de 1 à 4 atomes de carbone, un alcoxy ayant de 1 à 4 atomes de carbone ou un sulfo, si D² représente un radical benzène, ou représente un hydrogène ou un sulfo, si D² représente un radical naphtalène;
R⁵ représente un hydrogène, un chlore, un brome ou un sulfo, si D² représente un radical benzène, ou représente un hydrogène ou un sulfo, si D² représente un radical naphtalène;
X¹ représente un fluor;
X² représente un fluor, un brome ou un chlore;
Z¹ représente un groupe de formules générales (4a) ou (4b) 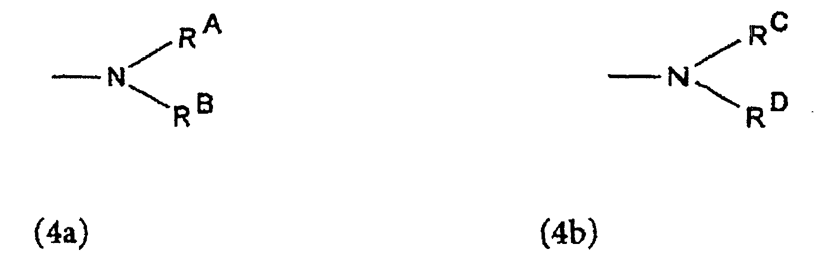
dans lesquelles
R^{A} représente un hydrogène ou un alkyle ayant de 1 à 4 atomes de carbone, qui peut être substitué,
R^{B} représente un hydrogène ou un alkyle ayant de 1 à 4 atomes de carbone, qui peut être substitué, ou le groupe -NRARB forme le radical d'un hétérocycle saturé à 5 à 7 chaînons, le radical alkylène de cet hétérocycle pouvant être également interrompu par 1 ou 2 groupes hétéro,
R^{C} représente un hydrogène ou un alkyle ayant de 1 à 4 atomes de carbone, qui peut être substitué, et
R^{D} représente un hydrogène ou un phényle, qui peut être substitué par 1 ou 2 substituants parmi le groupe constitué d'un alkyle ayant de 1 à 4 atomes de carbone, d'un alcoxy ayant de 1 à 4 atomes de carbone, d'un carboxy, d'un sulfo et d'un chlore;
Z² présente l'une des significations mentionnées pour Z¹,
X³ représente un fluor, un brome ou un chlore;
Z³ présente l'une des significations mentionnées pour Z¹,
Z⁰ représente un groupe de formules générales (5a), (5b), (5c) ou (5d) 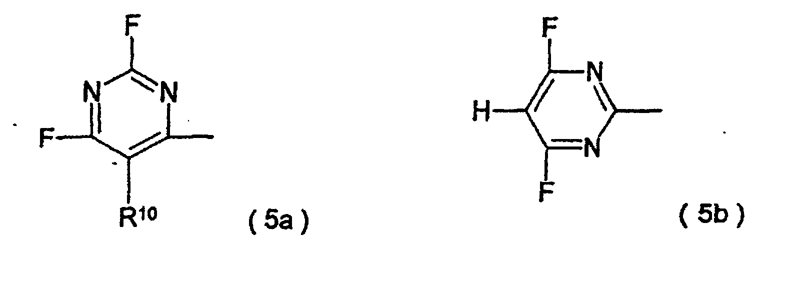 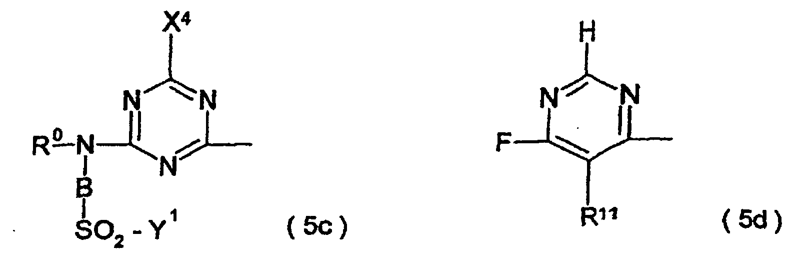
dans lesquelles
R¹⁰ représente un hydrogène ou un chlore,
R¹¹ représente un hydrogène, un chlore ou un fluor,
R⁰ représente un hydrogène, un alkyle ayant de 1 à 4 atomes de carbone, un phényle ou un phényle substitué par un chlore, un sulfo, un méthyle, un éthyle, un méthoxy, un éthoxy ou un carboxy,
X⁴ présente l'une des significations de X¹,
Y¹ présente l'une des significations de Y et
B représente un alkylène ayant de 2 à 6 atomes de carbone ou un alkylène ayant de 3 à 8 atomes de carbone, qui peut être interrompu par 1 ou 2 groupes hétéro;
le seul groupe -SO3M dans les radicaux sulfoaminonaphtol de formules (1), (2), (3) est lié au radical naphtalène en position méta ou para par rapport au groupe NH;
le groupe azo dans la formule (3) est lié au noyau benzénique en position méta ou para par rapport au groupe Z⁰-NH-.

2. Mélange de colorants selon la revendication 1, **caractérisé par** la teneur en un ou plusieurs colorants de formule générale (1) et en un ou plusieurs colorants de formules générales (2) ou (3) ou (2) et (3) en un rapport de mélange de 90 : 10% en poids à 10 : 90% en poids.

3. Mélange de colorants selon la revendication 1, **caractérisé par** la teneur en un ou plusieurs colorants de formule générale (1) et en un ou plusieurs colorants de formules générales (2) ou (3) ou (2) et (3) en un rapport de mélange de 70 : 30% en poids à 30 : 70% en poids.

4. Mélange de colorants selon la revendication 1, **caractérisé par** la teneur en un ou plusieurs colorants de formule générale (1) et en un ou plusieurs colorants de formules générales (2) ou (3) ou (2) et (3) en un rapport de mélange de 60 : 40% en poids à 40 : 60% en poids.

5. Mélange de colorants selon au moins l'une des revendications 1 à 4, **caractérisé en ce que** D¹ ou D² ou les deux représentent un noyau benzénique.

6. Mélange de colorants selon au moins l'une des revendications 1 à 5, **caractérisé en ce que** R¹ représente un hydrogène, un méthyle ou un méthoxy et R² représente un hydrogène, un méthyle ou un méthoxy.

7. Mélange de colorants selon au moins l'une des revendications 1 à 5, **caractérisé en ce que** R¹ et R² représentent tous les deux un hydrogène.

8. Mélange de colorants selon au moins l'une des revendications 1 à 4, **caractérisé en ce que** D² représente un radical naphtalène, R³ représente un hydrogène, R⁴ représente un hydrogène ou un sulfo et R⁵ représente un hydrogène ou un sulfo.

9. Mélange de colorants selon au moins l'une des revendications 1 à 8, **caractérisé en ce que** X¹ et X² sont tous les deux un fluor.

10. Utilisation d'un mélange de colorants selon la revendication 1, pour la teinture d'une matière renfermant des groupes hydroxy et/ou carboxamido, en particulier d'une matière fibreuse.

11. Procédé de teinture d'une matière renfermant des groupes hydroxy et/ou carboxamido, en particulier d'une matière fibreuse, dans lequel un ou plusieurs colorants sont appliqués sur la matière et ceux-ci sont fixés sur la matière par la chaleur ou à l'aide d'un agent alcalin ou au moyen des deux mesures, **caractérisé en ce qu'**un mélange de colorants selon la revendication 1 ou un ou plusieurs colorants de formule générale (1) définie dans la revendication 1 et un ou plusieurs colorants de formules générales (2) ou (3) ou (2) et (3) définies dans la revendication 1 sont utilisés ensemble individuellement en tant que colorants.
